(19) **Europäisches Patentamt / European Patent Office / Office européen des brevets**

(11) **EP 4 561 254 A1**

(12) **EUROPEAN PATENT APPLICATION**
published in accordance with Art. 153(4) EPC

(43) Date of publication:
**28.05.2025 Bulletin 2025/22**

(21) Application number: **23857555.9**

(22) Date of filing: **10.07.2023**

(51) International Patent Classification (IPC):
$H04W\ 76/15^{(2018.01)}$    $H04W\ 28/02^{(2009.01)}$
$H04W\ 28/06^{(2009.01)}$    $H04L\ 43/0888^{(2022.01)}$
$H04W\ 76/20^{(2018.01)}$    $H04W\ 84/12^{(2009.01)}$
$H04W\ 24/02^{(2009.01)}$    $H04W\ 24/08^{(2009.01)}$

(52) Cooperative Patent Classification (CPC):
H04L 43/0888; H04W 24/02; H04W 24/08;
H04W 28/02; H04W 28/06; H04W 76/15;
H04W 76/20; H04W 84/12

(86) International application number:
**PCT/KR2023/009790**

(87) International publication number:
**WO 2024/043517 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 24.08.2022 KR 20220106101
24.10.2022 KR 20220137636
21.12.2022 KR 20220180826
13.04.2023 KR 20230048699

(71) Applicant: **Samsung Electronics Co., Ltd.**
**Suwon-si, Gyeonggi-do 16677 (KR)**

(72) Inventors:
• YUN, Jusik
Suwon-si, Gyeonggi-do 16677 (KR)
• MIN, Hyunkee
Suwon-si, Gyeonggi-do 16677 (KR)
• YANG, Changmok
Suwon-si, Gyeonggi-do 16677 (KR)
• LIM, Junhak
Suwon-si, Gyeonggi-do 16677 (KR)
• CHOI, Junsu
Suwon-si, Gyeonggi-do 16677 (KR)
• CHOI, Hyeonu
Suwon-si, Gyeonggi-do 16677 (KR)

(74) Representative: **Appleyard Lees IP LLP**
**15 Clare Road**
**Halifax HX1 2HY (GB)**

(54) **ELECTRONIC DEVICE FOR CONTROLLING PLURALITY OF LINKS AND METHOD FOR OPERATING ELECTRONIC DEVICE**

(57) In an electronic device and a method for operating the electronic device according to various embodiments, the electronic device comprises: a communication circuit which transmits or receives data through at least one link created between an external electronic device and the electronic device; and a processor operatively connected to the communication circuit, wherein the processor can be configured to: confirm the delay time of the data transmitted or received through the at least one link; determine whether to activate a new link on the basis of a comparison result between the confirmed delay time and the delay time required to perform a service related to the data; on the basis of the determination to perform the activation of the new link, determine a data rate required for the new link on the basis of the confirmed delay time, the required delay time, and a data rate of the at least one link; transmit a link setup request message including information indicating the determined data rate to the external electronic device; and activate the new link on the basis of reception of a response message transmitted by the external electronic device. Various other embodiments are possible.

EP 4 561 254 A1

# FIG. 5

<u>500</u>

510

520

| COMMUNICATION CIRCUIT | ←——————→ | PROCESSOR |

# EP 4 561 254 A1

## Description

[Technical Field]

Various embodiments of the disclosure relate to an electronic device and operation method thereof and, more particularly, to a technique for controlling a plurality of links.

[Background **Art**]

With the widespread use of various electronic devices, improvements in the speed of wireless communication that various electronic devices can use have been achieved. Among wireless communications supported by recent electronic devices, IEE 802.11 WLAN (or Wi-Fi) is a standard for implementing highspeed wireless connections on various electronic devices. The first implemented Wi-Fi could support transmission speeds of up to 1 to 9 Mbps, but Wi-Fi 6 technology (or IEEE 802.11ax) can support transmission speeds of up to about 10 Gbps.

Electronic devices can support various services utilizing relatively large capacity data (e.g., UHD quality video streaming service, augmented reality (AR) service, virtual reality (VR) service, and/or mixed reality (MR) service) through wireless communication that supports high transmission rates, and can also support a variety of other services.

The IEEE 802.11 WLAN standard plans to introduce a technique for supporting multi-link operation (MLO) to improve the speed of data transmission and reception and reduce latency time. As electronic devices supporting multi-link operations can transmit or receive data through multiple links, they are expected to achieve relatively high transmission speeds and low latency times.

[Disclosure of Invention]

[Technical Problem]

Depending on the characteristics of the service running on an electronic device, the latency time required to carry out the service may vary. For example, if a service requiring realtimeness is running, the latency required to carry out the service may be relatively low, and if a service not requiring realtimeness is running, the latency required to carry out the service may be relatively high.

When an electronic device supporting multi-link operation carries out a service that may be performed smoothly even with relatively high latency, activating all of the multiple links may increase unnecessary power consumption.

When an electronic device supporting multi-link operation carries out a service that requires relatively low latency for smooth performance, activating some of the links may result in a degradation of the service quality.

The technical objectives to be achieved in this document are not limited to those mentioned above, and other technical objectives not mentioned will be clearly understood by a person skilled in the art to which the disclosure belongs from the following description.

[**Solution** to Problem]

An electronic device according to an example may include a communication circuit that transmits or receives data through at least one link established between an external electronic device and the electronic device. The electronic device may include a processor operably connected to the communication circuit. The processor may identify the latency of data transmitted or received through the at least one link. The processor may determine whether to activate a new link based on the result of comparison between the identified latency and the latency required to carry out the service related to the data. Based on determining to activate a new link, the processor may determine the data rate required for the new link based on the identified latency, the required latency, and the data rates of the at least one link. The processor may transmit a link setup request message including information indicating the determined data rate to the external electronic device. The processor may activate the new link based on reception of a response message transmitted by the external electronic device.

An operation method of the electronic device according to an example may include identifying the latency of data transmitted or received through at least one link established between an external electronic device and the electronic device. The operation method of the electronic device may include determining whether to activate a new link based on the result of comparison between the identified latency and the latency required to carry out the service related to the data. Based on determining to activate a new link, the operation method of the electronic device may include determining the data rate required for the new link based on the identified latency, the required latency, and the data rates of the at least one link. The operation method of the electronic device may include transmitting a link setup request message including information indicating the determined data rate to the external electronic device. The operation method of the electronic

3

device may include activating the new link based on reception of a response message transmitted by the external electronic device.

An electronic device according to an example may include a communication circuit that transmits or receives data through at least one link among multiple links established between an external electronic device and the electronic device. The electronic device may include a processor. The processor may identify information about each of the multiple links while the electronic device carries out a service. Based on the information about each of the multiple links, the processor may set one of the multiple links as the primary link that is allowed to receive a beacon during an idle period when no data traffic is transmitted and/or received, and may set the remaining links excluding the one link as secondary links that are not allowed to receive a beacon during the idle period.

[Advantageous Effects of Invention]

The electronic device and operation method thereof according to an embodiment may determine whether to activate a new link based on the latency time of data transmission or reception through at least one link and the required latency time. Hence, the electronic device can increase the quality of service by activating a new link when the latency time of data transmission or reception through at least one link is greater than or equal to (or, above) the required latency time.

The electronic device and operation method thereof according to an embodiment may determine the required data rate of a new link based on the latency time of data transmission or reception through at least one link and the required latency time, and transmit a link setup request message including information indicating the determined data rate to an external electronic device. The external electronic device may select a link capable of smoothly carrying out the service based on the data rate included in the link setup request message and transmit information indicating the selected link to the electronic device. Thus, the electronic device may increase the quality of service by activating the new link capable of smoothly carrying out the service.

The electronic device and operation method thereof according to an embodiment may determine whether to deactivate some links based on the latency time of data transmission or reception through at least one link and the required latency time. Hence, the electronic device may reduce unnecessary power consumption by deactivating some links when the latency time of data transmission or reception through at least one link is less than or equal to (or, below) the required latency time.

The electronic device and operation method thereof according to an embodiment may set, based on information about multiple links, one of the multiple links as a primary link capable of beacon reception, and set the remaining links as a secondary link incapable of beacon reception while data traffic is not transmitted. Hence, the electronic device may reduce unnecessary power consumption caused by keeping multiple links in the activated state for beacon reception.

The effects obtainable from the disclosure are not limited to those mentioned above, and other effects not mentioned will be clearly understood by a person skilled in the art to which the disclosure belongs from the following description.

[Brief Description of Drawings]

FIG. 1 is a block diagram of an electronic device according to various embodiments of the disclosure.
FIG. 2 is a block diagram of programs according to various embodiments.
FIG. 3 is a diagram illustrating an example in which an electronic device and an access point (AP) operate in multi-link operation (MLO) according to various embodiments of the disclosure.
FIG. 4A is a diagram depicting the latency time required for the electronic device to transmit or receive data according to various embodiments of the disclosure.
FIG. 4B is a diagram depicting the latency time required for the electronic device to transmit or receive data according to various embodiments of the disclosure.
FIG. 5 is a block diagram of an electronic device according to various embodiments of the disclosure.
FIG. 6 is a diagram illustrating an example in which the electronic device switches some links to a deactivated state according to various embodiments of the disclosure.
FIG. 7 is a diagram illustrating an example in which the electronic device switches some links to an activated state according to various embodiments of the disclosure.
FIG. 8 is a diagram illustrating an example in which the electronic device switches some links to a deactivated state and switches other links to an activated state according to various embodiments of the disclosure.
FIG. 9 is a diagram illustrating an example in which the electronic device transmits a signal for link activation according to various embodiments of the disclosure.
FIG. 10 is a diagram illustrating an example in which the electronic device transmits a signal for link activation according to various embodiments of the disclosure.

FIG. 11 is a flowchart illustrating an operation method of the electronic device according to various embodiments of the disclosure.

FIG. 12 is a flowchart illustrating an operation method of the electronic device according to various embodiments of the disclosure.

FIG. 13 is a block diagram of an electronic device according to an embodiment.

FIG. 14 is a diagram illustrating an example in which the electronic device sets one of multiple links as a primary link and performs settings about plural links through the primary link according to an embodiment.

FIG. 15 is a diagram illustrating an example in which the electronic device changes the primary link when the quality of the primary link satisfies a specified condition according to an embodiment.

FIG. 16 is a diagram illustrating an example in which the electronic device changes the primary link in response to activation of another short-range wireless communication utilizing a frequency band that at least partially overlaps with the frequency bands of multiple links according to an embodiment.

FIG. 17 is a flowchart illustrating an operation method of the electronic device according to an embodiment.

[Mode for the Invention]

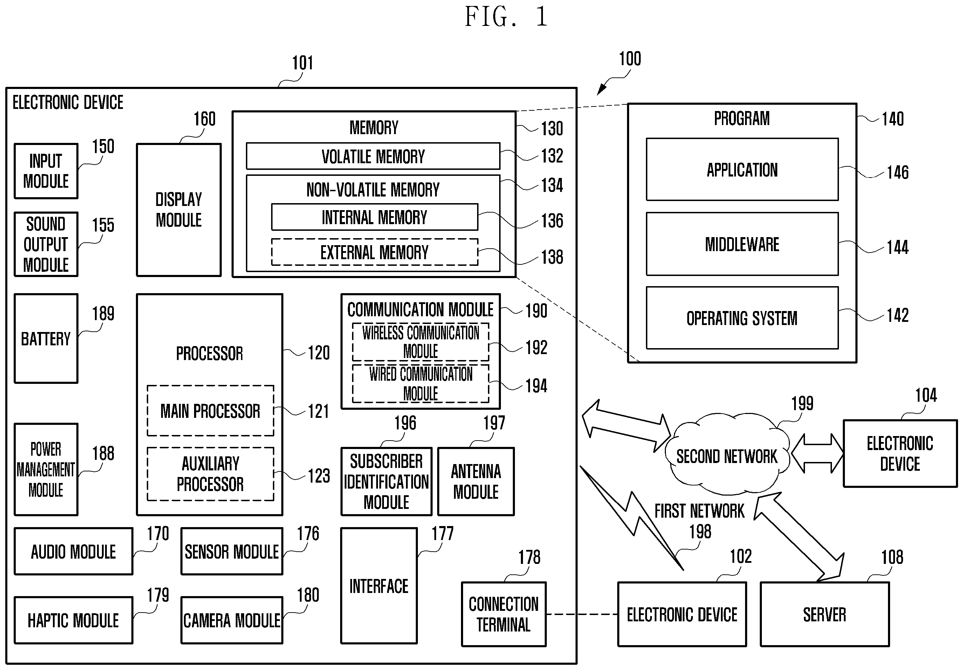

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding

**EP 4 561 254 A1**

one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication

7

technology or IoT-related technology.

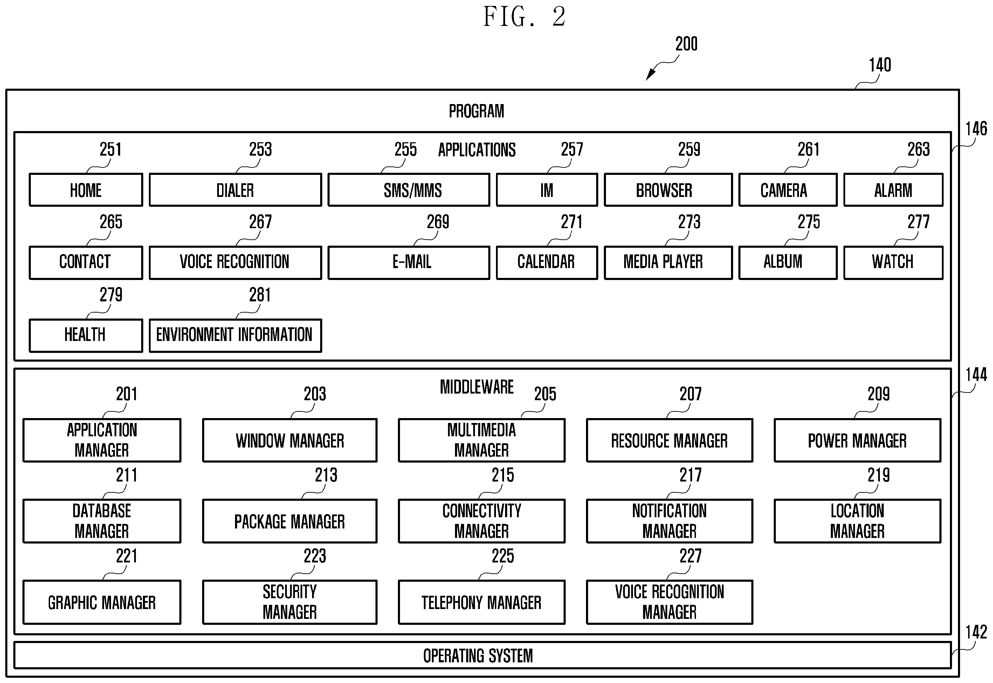

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, Android™, iOS™, Windows™, Symbian™, Tizen™, or Bada™. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130. The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

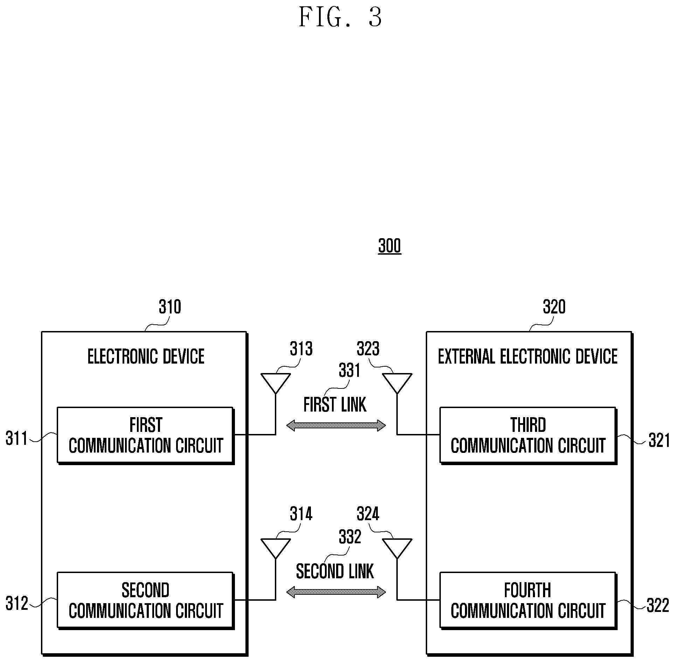

FIG. 3 is a diagram illustrating an example in which an electronic device and an access point (AP) operate in multi-link operation (MLO) according to various embodiments of the disclosure.

With reference to FIG. 3, the wireless LAN system 300 may include an electronic device 310 and/or an external electronic device 320. According to an embodiment, the electronic device 310 may perform wireless communication with the external electronic device 320 through short-range wireless communication. Wireless communication may refer to various communication methods that both the electronic device 310 and/or the external electronic device 320 can support. For example, wireless communication may be Wi-Fi. The external electronic device 320 may serve as a base station that provides wireless communication to at least one electronic device 310 located inside the communication radius of the wireless LAN system 300. For example, the external electronic device 320 may include an access point (AP) of IEEE 802.11. The electronic device 310 may include a station (STA) of IEEE 802.11. As another example, the external electronic device 320 may include a station (STA) of IEEE 802.11, and the electronic device 310 may include an access point (AP) of IEEE 802.11.

According to various embodiments of the disclosure, the electronic device 310 and/or the external electronic device 320 may support multi-link operation (MLO). The multi-link operation may be an operation mode in which data is transmitted or received through plural links (e.g., first link 331 and second link 332). The multi-link operation is an operation mode to be introduced in IEEE 802.11be, and may be an operation mode in which data is transmitted or received through plural links based on plural bands or channels.

According to various embodiments of the disclosure, the electronic device 310 may include a plurality of communication circuits (e.g., first communication circuit 311 and/or second communication circuit 312) to support multi-link operation. The first communication circuit 311 may transmit data to the external electronic device 320 through a first link 331 or receive data transmitted by the external electronic device 320 through the first link 331. The first communication circuit 311 may output or receive a signal of a frequency band corresponding to the first link 331 through a first antenna 313. The second communication circuit 312 may transmit data to the external electronic device 320 through a second link 332 or receive data transmitted by the external electronic device 320 through the second link 332. The second communication circuit 312 may output or receive a signal of a frequency band corresponding to the second link 332 through a second antenna 314.

According to various embodiments of the disclosure, the external electronic device 320 may include a plurality of communication circuits (e.g., third communication circuit 321 and/or fourth communication circuit 322) to support multi-link operation. The third communication circuit 321 may transmit data to the electronic device 310 through the first link 331 or receive data transmitted by the electronic device 310 through the first link 331. The third communication circuit 321 may output or receive a signal of a frequency band corresponding to the first link 331 through a third antenna 323. The fourth communication circuit 322 may transmit data to the electronic device 310 through the second link 332 or receive data transmitted by the electronic device 310 through the second link 332. The fourth communication circuit 322 may output or receive a signal of a frequency band corresponding to the second link 332 through a fourth antenna 324.

According to various embodiments of the disclosure, the frequency band of the first link 331 and the frequency band of the second link 333 may be different from each other. For example, the frequency band of the first link 331 may be 2.5 GHz, and the frequency band of the second link 332 may be 5 GHz or 6 GHz.

According to various embodiments of the disclosure, a different electronic device other than the electronic device 310 may also use the first link 331 and the second link 332. To prevent a situation in which the electronic device 310 and another electronic device transmit or receive data through the same link at the same time, the electronic device 310 may support a carrier sense multiple access with collision avoidance (CSMA/CA) method. The CSMA/CA method may be a scheme for performing data transmission when a specific link (e.g. first link 331 and/or second link 332) is in idle state. The electronic device 310 supporting CSMA/CA may check whether another electronic device transmits data through a specific link, and, upon sensing data transmission, may wait without transmitting data through the specific link. Upon confirming that another electronic device does not transmit data through the specific link, the electronic device 310 supporting CSMA/CA may transmit data through the specific link according to a specified scheme (e.g., activating a timer and transmitting data when the timer expires). In this way, the electronic device 310 may perform data transmission and/or reception through a specific link without colliding with another electronic device.

According to various embodiments of the disclosure, the first link 331 and/or the second link 332 supported by the multi-link operation may independently support CSMA/CA.

The electronic device 310 supporting CSMA/CA may check whether a specific link is in an idle state before transmitting data. The electronic device 310 may transmit data through a specific link in idle state.

The electronic device 310 may identify whether the first link 331 is in idle state based on information related to the idle state of the first link 331 included in data transmitted by the external electronic device 320. The information related to the idle state of the first link 331 may include a CCA status field (clear channel assessment field) and/or a network allocation vector (NAV) configuration field. The information related to the idle state of the first link 331 may be included in a ready to send (RTS) message for requesting data transmission through the first link 331, or in a clear to send (CTS) message indicating that data transmission is possible through the first link 331. The electronic device 310 may identify whether a specific link is in idle state by referring to the CCA status field and/or the NAV configuration field. The electronic device 310 may determine whether the first link 331 is physically idle by referring to the CCA status field, and determine whether the first link 331 is logically idle by referring to the NAV configuration field. In response to confirming that the first link 331 is in idle state, the electronic device 310 may activate a timer, and may transmit data to the external electronic device 320 through the first link 331 in response to expiration of the timer after a specified time.

The electronic device 310 may identify whether the second link 332 is in idle state based on information related to the idle state of the second link 332 included in data transmitted by the external electronic device 320. The information related to the idle state of the second link 332 may include a CCA status field (clear channel assessment field) and/or a network allocation vector (NAV) configuration field. The information related to the idle state of the second link 332 may be included in a ready to send (RTS) message for requesting data transmission through the second link 332, or in a clear to send (CTS) message indicating that data transmission is possible through the second link 332. The electronic device 310 may identify whether a specific link is in idle state by referring to the CCA status field and/or the NAV configuration field. The electronic device 310 may determine whether the second link 332 is physically idle by referring to the CCA status field, and determine whether the second link 332 is logically idle by referring to the NAV configuration field. In response to confirming that a specific link is in idle state, the electronic device 310 may activate a timer, and may transmit data to the external electronic device 320 through the second link 332 in response to expiration of the timer after a specified time.

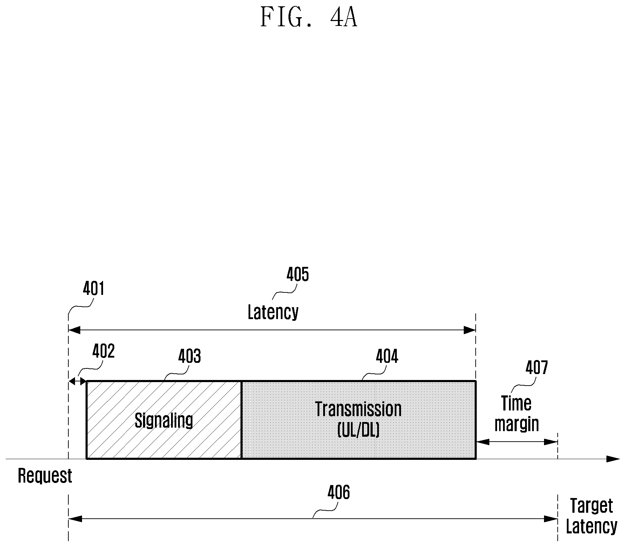

FIG. 4A is a diagram illustrating a latency time required for the electronic device to transmit or receive data according to various embodiments of the disclosure.

The electronic device (e.g., electronic device 310 in FIG. 3) may transmit or receive data to or from an external electronic device (e.g., external electronic device 320 in FIG. 3) to carry out a service that is running or is to be run on the electronic device 310.

The electronic device 310 may transmit or receive data to or from the external electronic device 320 through at least some of the plural links including the first link (e.g., first link 331 in FIG. 3) and/or the second link (e.g., second link 332 in FIG. 3).

Services may have different required latency times depending on their characteristics. The required latency time may refer to the minimum time required to carry out the service smoothly. For example, a service that requires realtimeness (real-time service such as video call service or voice call service) may have a lower required latency compared with other services. As an example, a service that does not require realtimeness (non-real-time service such as web browsing service or streaming service) may have a higher required latency compared with other services.

With reference to FIG. 4A, the latency (405) required to transmit or receive data may be the sum of the waiting time (402) required between the time (401) of requesting data transmission or reception and the time of starting to transmit a link setup signal for data transmission or reception, the time (403) required to transmit the link setup signal for data transmission or reception, and/or the time (404) required to transmit or receive data.

With reference to FIG. 4A, the latency (405) may be lower than the latency (406) required according to the characteristics of the service. The difference between the latency (405) and the required latency (406) may be referred to as the time margin (407). If the time margin (407) has a positive value, the link (e.g., first link 331 or second link 332) activated between the electronic device 310 and the external electronic device 320 may be in a state where smooth execution of the service is possible. However, as the value of the time margin (407) increases, some of the links (e.g., first link 331 and second link 332) activated between the electronic device 310 and the external electronic device 320 may be unnecessarily activated, thereby increasing the power consumption of the electronic device 310.

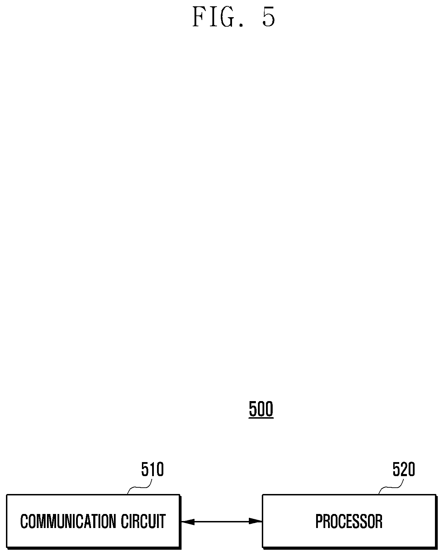

In FIG. 5, a description will be given of an embodiment in which some links are deactivated so as to reduce power consumption of the electronic device 310 while maintaining the latency (405) lower than the latency (406) required according to the characteristics of the service.

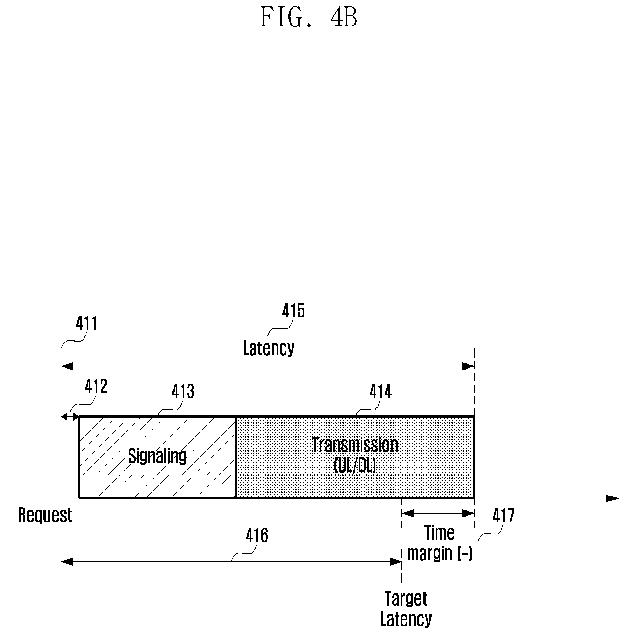

FIG. 4B is a diagram illustrating a latency time required for the electronic device to transmit or receive data according to various embodiments of the disclosure.

The electronic device (e.g., electronic device 310 in FIG. 3) may transmit or receive data to or from an external electronic device (e.g., external electronic device 320 in FIG. 3) to carry out a service that is running or is to be run on the electronic device 310.

The electronic device 310 may transmit or receive data to or from the external electronic device 320 through at least some of the plural links including the first link (e.g., first link 331 in FIG. 3) and/or the second link (e.g., second link 332 in FIG. 3).

Services may have different required latency times depending on their characteristics. The required latency time may refer to the minimum time required to carry out the service smoothly. For example, a service that requires realtimeness (real-time service such as video call service or voice call service) may have a lower required latency compared with other services. As an example, a service that does not require realtimeness (non-real-time service such as web browsing service or streaming service) may have a higher required latency compared with other services.

With reference to FIG. 4B, the latency (415) required to transmit or receive data may be the sum of the waiting time (412) required between the time (411) of requesting data transmission or reception and the time of starting to transmit a link setup signal for data transmission or reception, the time (413) required to transmit the link setup signal for data transmission or reception, and/or the time (414) required to transmit or receive data.

With reference to FIG. 4B, the latency (415) may be higher than the latency (416) required according to the characteristics of the service. The difference between the latency (415) and the required latency (416) may be referred to as the time margin (417). If the time margin (417) has a negative value, the activated links (e.g., first link 331 and second link 332) between the electronic device 310 and the external electronic device 320 may be in a state where there is a difficulty in smooth execution of the service. As the absolute value of the time margin (417) increases, the quality of service may deteriorate further.

In FIG. 5, a description is given of an embodiment in which some links are activated so that the latency (405) is lower than the latency (406) required according to the characteristics of the service. In particular, a description is given of an embodiment that enables the external electronic device 320 to activate a link capable of satisfying an additionally required data rate so as to have the latency 405 that is lower than the latency (406) required according to the characteristics of the service.

FIG. 5 is a block diagram of an electronic device according to various embodiments of the disclosure.

According to various embodiments of the disclosure, the electronic device 500 (e.g., electronic device 310 in FIG. 3) may include a communication circuit 510 (e.g., first communication circuit 311 or second communication circuit 312 in FIG. 4B), and/or a processor 520 (e.g., processor 120 in FIG. 1).

The communication circuit 510 may include various circuit structures used for modulating and/or demodulating signals in the electronic device 310. For example, the communication circuit 510 may modulate a baseband signal into a radio frequency (RF) band signal to be output through an antenna (not shown), or may demodulate an RF band signal received through an antenna into a baseband signal and forward it to the processor 520.

The communication circuit 510 may transmit multiple packets through the first link (e.g., first link 331 in FIG. 3) to an external electronic device (e.g., external electronic device 320 in FIG. 3), or receive data transmitted by the external electronic device 320 through the first link 331. The communication circuit 510 may transmit data through the second link (e.g., second link 332 in FIG. 3) to the external electronic device 320, or receive data transmitted by the external electronic device 320 through the second link 332. The communication circuit 510 can output or receive a signal of a frequency band corresponding to the first link 331 through an antenna (e.g., first antenna 313 in FIG. 3), and may output or receive a signal of a frequency band corresponding to the second link 332 through an antenna (e.g., second antenna 314 in FIG. 3).

The communication circuit 510 may transmit or receive data through multiple links including the first link 331 and the second link 332. According to an example, when the communication circuit 510 supports up to three links for data transmission or reception, the communication circuit 510 may transmit data through the third link to the external electronic device 320, or receive data transmitted by the external electronic device 320 through the third link.

The processor 520 may perform an operation of receiving data transferred by the application processor (e.g., processor 120 in FIG. 1) and generating a packet for transmitting the received data to the external electronic device 320. The processor 520 may be referred to as a communication processor included in a communication module (e.g., wireless communication module 192 in FIG. 1). According to an embodiment, the processor 520 may perform channel coding based on data transferred by the application processor (e.g., application processor 120 in FIG. 1) to thereby generate a packet, or may check whether at least a portion of data received from the external electronic device 320 has an error and perform an error recovery operation (e.g., hybrid auto repeat request (HARQ)) if an error has occurred.

The processor 520 operably connected to the communication circuit 510 may control the operation of the communication circuit 510. The processor 520 may receive data from the application processor 120 and select, based on the service characteristics included in the data, a channel to be used for transmitting or receiving a packet corresponding to the data. The data may be data related to the service running on the electronic device 500. For example, when a video call service is running on the electronic device 500, the data may be data related to the video call service (e.g., voice data, video data).

The processor 520 may control the communication circuit 510 to activate or deactivate at least some links among the multiple links based on the latency of data transmission or reception and the latency required to carry out the service.

As part of the operation of activating or deactivating at least some links among the multiple links, the processor 520 may identify the latency for transmitting or receiving data through at least one of the multiple links.

According to one example, the processor 520 may monitor the time at which data transmission or reception is requested (e.g., 401 in FIG. 4A, 411 in FIG. 4B) and/or the time at which data transmission or reception is completed, identify the difference between the time at which data transmission or reception is requested and the time at which data transmission or reception is completed, and determine the identified difference to be the latency of data transmission or reception.

When the processor 520 transmits or receives data through multiple links (e.g., first link 331, second link 333, and/or third link), the latency of data transmission or reception may be determined according to Equation 1 below.

$$[\text{Equation 1}]$$

$$T_{tran} = \max_{i \in \{1,2,3\}} \left( \frac{n_i}{R_i} \right)$$

($T_{tran}$: latency of data transmission or reception, $n_i$: size of data transmitted or received through $i^{th}$ link, $R_i$: data rate of $i^{th}$ link, i: link)

With reference to Equation **1,** the latency of data transmission or reception may be set to the maximum value among the latency of data transmission or reception through the first link 331, the latency of data transmission or reception through the second link 333, and the latency of data transmission or reception through the third link.

The processor 520 may store history information including the latency of data transmission or reception through at least one link in the memory (e.g., memory 130 in FIG. 1) when transmitting or receiving data, and may identify the latency of data transmission or reception based on the history information.

The processor 520 may identify the latency required to carry out the service on the electronic device 500.

The processor 520 may identify the type of data (e.g., AC_BE (best effort), AC_BK, AC_VI, AC_VO) included in the data transferred by the application processor 120, and may identify the latency required to carry out the service on the electronic device 500 by referring to the mapping data in which the type of data and the required latency are mapped. The mapping data may be stored on the memory accessible to the processor 520 (e.g., memory 130 in FIG. 1) and may be generated or updated by the processor 520.

After the application processor 120 receives information indicating the latency required for service execution, the processor 520 may also identify the latency required to carry out the service based on the information indicating the latency.

The processor 520 may identify the latency required to carry out the service in various ways besides those methods described above.

The processor 520 may determine whether to deactivate an activated link or activate a deactivated link based on the latency of data transmission or reception through at least one link and the latency required to carry out the service.

The processor 520 may identify that the latency of data transmission or reception through at least one link is higher than or equal to (or, above) the latency required to carry out the service. Upon identifying that the latency of data transmission or reception through at least one link is higher than or equal to (or, above) the latency required to carry out the service, the processor 520 may perform a series of procedures to activate a new link and transmit or receive data through the newly and previously activated links.

As part of the operation to activate a new link (e.g., third link), the processor 520 may determine the data rate required for the new link.

The processor 520 may determine the data rate required for the new link based on the difference between the latency of data transmission or reception through the new link (e.g., third link) and the activated link (e.g., first link 331, second link 333) and the latency of data transmission or reception through only the activated link.

For example, Equation 2 below describes the latency of data transmission or reception through the new link and activated link, and Equation 3 below, as a quality of service (QoS) condition that the latency of data transmission or reception through the new link and activated link should satisfy, may indicate the condition that the latency of data transmission or reception through the new link and activated link should be lower than the existing latency (latency of data transmission or reception through only the activated link) minus the time margin (difference between the existing latency and the latency required to carry out the service).

$$[\text{Equation 2}]$$

$$T_{new\_tran} = \frac{N}{\sum_{i \in K} R_i}$$

($T_{new\_tran}$: latency of data transmission or reception when new link is activated, N: size of data to be transmitted or received through new and activated links, $R_i$: data rate of $i^{th}$ link, i: link)

[Equation 3]

$$T_{tran} - T_{new\_tran} > T_{margin}$$

($T_{tran}$: latency of data transmission or reception through activated link, $T_{new\_tran}$: latency of data transmission or reception when new link is activated, $T_{margin}$: difference between the existing latency and the latency required to carry out the service)

Based on Equations 2 and 3, it is possible to derive Equation 4 indicating a condition that the sum of the data rates of the new link and the activated link must satisfy.

[Equation 4]

$$\sum_{i \in K} R_i > \frac{N}{T_{tran} - T_{margin}}$$

($T_{tran}$: latency of data transmission or reception through activated link, $T_{margin}$: difference between the existing latency and the latency required to carry out the service, N: size of data to be transmitted or received through activated link and new link, i: link, K: new and activated links)

$\sum_{i \in K} R_i$ is the sum of the data rates of the new and previously activated links, and since the data rate of the previously activated link can be identified by the processor 520, the data rate required for the new link may be determined using Equation 5 below.

[Equation 5]

$$R_{new} > \frac{N}{T_{tran} - T_{margin}} - \sum_{i \in K'} R_i$$

($R_{new}$: data rate required for new link, $T_{tran}$: latency of data transmission or reception through activated link, $T_{margin}$: difference between the existing latency and the latency required to carry out the service, N: size of data to be transmitted or received through activated and new links, i: link, K': activated links)

The processor 520 may determine the data rate required for the new link based on Equation 5 (or, based on the size of data to be transmitted or received, the sum of data rates of the activated links, the latency of data transmission or reception through the activated links, and the time margin).

The processor 520 may transmit information indicating the data rate required for the new link to the external electronic device 320. The processor 520 may transmit a link setup request message including information indicating the data rate required for the new link to the external electronic device 320.

The link setup request message may be included in an association request frame defined in IEEE 802.11. According to an example, information indicating the data rate required for the new link may be included in the enhanced high throughput (EHT) capability field of the association request frame, and the information indicating the data rate required for the new link may be included in a reserved field of the EHT capability field, but there is no restriction on the zone in which the information indicating the data rate required for the new link is included.

The link setup message may be transmitted to the external electronic device 320 through the existing activated link or new link. The link setup message may be transmitted in various ways to reduce the time required to set up a new link.

According to an example, when transmitting data to the external electronic device 320, the processor 520 may transmit a link setup message together with the data. The processor 520 may transmit a link setup message to the external electronic device 320 within a specified time after completion of data transmission. The processor 520 may transmit a link setup message to the external electronic device 320 before receiving a response message indicating completion of data transmission from the external electronic device 320.

According to an example, the processor 520 may transmit a link setup message to the external electronic device 320 during a process of transmitting a response message indicating completion of data reception to the external electronic device 320 while receiving data from the external electronic device 320. The processor 520 may transmit a link setup message together with the response message to the external electronic device 320. The processor 520 may transmit a link setup message to the external electronic device 320 within a specified time after completion of transmission of the response message.

The external electronic device 320 may check the information indicating the data rate required for a new link and identify whether it is possible to activate a link satisfying the required data rate. Based on the possibility of activating a link satisfying the required data rate, the external electronic device 320 may transmit a response message including information indicating the link satisfying the required data rate to the electronic device 500.

Upon receiving information indicating a link satisfying the required data rate from the external electronic device 320, the processor 520 may perform a series of operations to activate a new link.

As part of the operation of activating a new link, the processor 520 may distribute data to be transmitted over the new and activated links. The processor 520 may distribute data to be transmitted over the new and activated links based on the data rate of the new link and the data rate of each activated link. The processor 520 may distribute data to be transmitted over the new and activated links based on the data rate of the new link and the data rate of each activated link so as to minimize power consumption.

The power consumption of a link may increase as the time required to transmit or receive data through the link increases. Hence, minimizing power consumption may be achieved by setting the times at which transmissions of individual links are completed to be substantially the same. To set the times at which transmissions of individual links are completed to be substantially the same, the processor 520 may distribute data over each link based on the ratio of the data rate of one link to the sum of the data rates of the links. For example, the processor 520 may determine the size of data to be distributed over one link by using Equation 6 below.

$$[\text{Equation 6}]$$

$$n_i^* = \frac{NR_i}{\sum_{i=1}^{n} R_i}$$

($n_i^*$: size of data to be allocated to $i^{th}$ link, N: size of data to be transmitted or received through all activated links, $R_i$: data rate of $i^{th}$ link, $\sum_{i=1}^{n} R_i$: sum of data rates of i links)

The processor 520 may control the communication circuit 510 to transmit or receive a portion of data having a determined data size to or from the external electronic device 320 through the new link. The processor 520 may control the communication circuit 510 to transmit or receive another portion of the data having a determined data size to or from the external electronic device 320 through the previously activated link.

In connection with determining whether to activate a new link, the processor 520 may check whether there is a link in idle state (doze state or inactive state) among the links (e.g., first link 331, second link 333, and/or third link) established between the electronic device 500 and the external electronic device 320. Based on the presence of a link in idle state, the processor 520 may check the data rate of the link in idle state. The processor 520 may compare the data rate of the link in idle state with the required data rate and determine whether to activate a new link based on the comparison result.

According to an example, based on determining that the data rate of the link in idle state is greater than or equal to (or, above) the required data rate, the processor 520 may switch the link in idle state to an active state instead of activating a new link.

To switch the link in idle state to an active state, the processor 520 may transmit a multi-link traffic indication element frame indicating that data transmission or reception is possible through a link in idle state to the external electronic device 320.

According to an example, based on determining that the data rate of the link in idle state is less than or equal to (or, below) the required data rate, the processor 520 may perform activation of a new link instead of switching the link in idle state to an active state.

The processor 520 may also deactivate some of the previously activated links and activate a new link. If the maximum number of links that the communication circuit 510 can support are all activated (or, if the number of links equal to the maximum number of links that the communication circuit 510 can support are already activated), the processor 520 may deactivate some of the links and activate a new link. According to an example, the link to be deactivated may be the link with the lowest data rate. The link to be deactivated may be the link with the highest power consumption.

If some links become deactivated, the data rate required for the new link may be greater than the data rate required for the new link when those links are assumed to remain in activated state.

The processor 520 may determine the data rate required for the new link by using Equation 7 below.

$$[\text{Equation 7}]$$

$$R_{new} > \frac{N}{T_{tran} - T_{margin}} - \sum_{i \in K^*} R_i$$

($R_{new}$: data rate required for new link, $T_{tran}$: latency of data transmission or reception through activated links, $T_{margin}$: difference between existing latency and latency required to carry out the service, N: size of data to be transmitted or received through activated and new links, i: link, K*: links excluding those to be deactivated among activated links)

The processor 520 may determine the data rate required for the new link based on Equation 7 (or, based on the size of data to be transmitted or received, the sum of data rates of links excluding those links to be deactivated among the activated links, the latency of data transmission or reception through the activated link, and the time margin).

The processor 520 may transmit information indicating the data rate required for the new link to the external electronic device 320. The processor 520 may transmit a link setup request message including information indicating the data rate required for the new link to the external electronic device 320.

The processor 520 may identify that the latency of data transmission or reception through at least one link is lower than or equal to (or, below) the latency required to carry out the service. Based on identifying that the latency of data transmission or reception through at least one link is lower than or equal to (or, below) the latency required to carry out the service, the processor 520 may perform a series of procedures to deactivate at least one link and transmit or receive data through the remaining links. The link to be deactivated may be the link with the lowest data rate among the activated links, or may be the link with the highest power consumption.

To determine whether to deactivate one link, the processor 520 may check whether the latency of data transmission or reception through the remaining links can satisfy a condition associated with the latency required to carry out the service. The condition associated with the required latency may include a condition that the latency of data transmission or reception through the remaining links is lower than or equal to (or, below) the latency required to carry out the service.

For example, Equation 8 below describes the latency of data transmission or reception through the remaining links except for the link to be deactivated, and Equation 9 below, as a quality of service (QoS) condition that should be satisfied by the latency of data transmission or reception through the remaining links excluding the link to be deactivated, may mean the condition that the latency of data transmission or reception through the remaining links excluding the link to be deactivated should be less than the existing latency (the latency of data transmission or reception through activated links) minus the time margin (the difference between the existing latency and the latency required to carry out the service).

[Equation 8]

$$T_{new\_tran} = \frac{N}{\sum_{i \in K^*} R_i}$$

($T_{new\_tran}$: latency of data transmission or reception when at least one link (e.g., first link 331) is deactivated, N: size of data to be transmitted or received through the remaining links, $R_i$: data rate of $i^{th}$ link, i: link, K*: links excluding those to be deactivated among activated links)

[Equation 9]

$$T_{new\_tran} - T_{tran} \leq T_{margin} \times \alpha$$

($T_{tran}$: latency of data transmission or reception through activated links, $T_{new\_tran}$: latency of data transmission or reception when at least one link (e.g., first link 331) is deactivated, $T_{margin}$: difference between the existing latency and the latency required to carry out the service, $\alpha$: guard interval parameter)

To minimize the latency ($T_{new\_tran}$) of data transmission or reception when at least one link is deactivated, the processor 520 may set the times at which transmissions of the remaining links are completed to be substantially the same. To set the times at which transmissions of the remaining links are completed to be substantially the same, the processor 520 may distribute data over individual links based on the ratio of the data rate of one link to the sum of the data rates of the remaining links. For example, the processor 520 may determine the size of data to be distributed over one link by using Equation 10 below.

[Equation 10]

$$n_i^* = \frac{N R_i}{\sum_{i=1}^{n} R_i}$$

($n_i^*$ : size of data to be allocated to $i^{th}$ link, N: size of data to be transmitted or received through all activated links, $R_i$: data rate of $i^{th}$ link, $\sum_{i=1}^{n} R_i$ : sum of data rates of i links)

When the value obtained from Equation 10 is substituted into Equation 8, Equation 11 below may be derived.

[Equation 11]

$$\frac{N}{T_{margin} \times \alpha + T_{tran}} \leq \sum_{i \in K^*} R_i$$

(N: size of data to be transmitted or received through the remaining links, $R_i$: data rate of $i^{th}$ link, i: link, K*: links excluding those to be deactivated among activated links, $T_{margin}$: difference between the existing latency and the latency required to carry out the service, $\alpha$: guard interval parameter)

Equation 11, as a quality of service (QoS) condition that should be satisfied by the latency of data transmission or reception through the remaining links excluding the link to be deactivated, may mean the condition that the latency of data transmission or reception through the remaining links excluding the link to be deactivated should be lower than the existing latency (the latency of data transmission or reception through activated links) minus the time margin (the difference between the existing latency and the latency required to carry out the service).

According to an example, if at least one link is deactivated, the processor 520 may check whether Equation 11 is satisfied, and determine to deactivate at least one link when Equation 11 is satisfied.

According to an example, if at least one link is deactivated, the processor 520 may check whether Equation 11 is satisfied, and determine not to deactivate at least one link when Equation 11 is not satisfied.

The processor 520 may also determine whether to deactivate at least one link based on whether the power consumption that may occur when at least one link is deactivated satisfies a specified condition. The specified condition may include a condition that the power consumption that occurs when at least one link is deactivated is less than the power consumption that occurs when at least one link is not deactivated.

According to an example, the processor 520 may determine that the power consumption that occurs when at least one link is deactivated satisfies the specified condition if Equation 12 below is satisfied. Equation 12 may be an equation used to determine whether the specified condition is satisfied.

[Equation 12]

$$P_{gain} = P_{tot} - P_{new\_tot} = P_{tot} - \max_{i \in K^*}\left(\frac{n_i^*}{R_i}\right)\sum_{i \in K^*} p_i > 0$$

($P_{gain}$: power gain, $P_{tot}$: power consumed when not deactivating a link, $P_{new\_tot}$: power consumed when deactivating a link, $R_i$: data rate of $i^{th}$ link, $n_i^*$ : size of data to be transmitted or received through $i^{th}$ link, $p_i$: power consumed by $i^{th}$ link)

Equation 12 may be modified into Equation 13 below.

[Equation 13]

$$\frac{\sum_{i \in K^*} R_i}{\sum_{i \in K^*} p_i} > \frac{N}{P_{tot}}$$

According to an example, the processor 520 may determine that the power consumption that occurs when at least one link is deactivated satisfies the specified condition if Equation 13 is satisfied. Equation 13 may be an equation used to determine whether the specified condition is satisfied.

Based on the determination to deactivate at least one link, the processor 520 may transmit a signal including information indicating the link to be deactivated to the external electronic device 320. According to an example, the processor 520 may deactivate at least one link by transmitting a traffic identifier (TID)-to-link mapping frame configured in a manner of disabling the traffic identifier (TID) mapped to the link to be deactivated to the external electronic device 320.

Based on the embodiments described above, the electronic device 500 may perform short-range wireless communication with a lower latency than that required to carry out the service while increasing power efficiency by activating new links and/or deactivating some links depending on the situation.

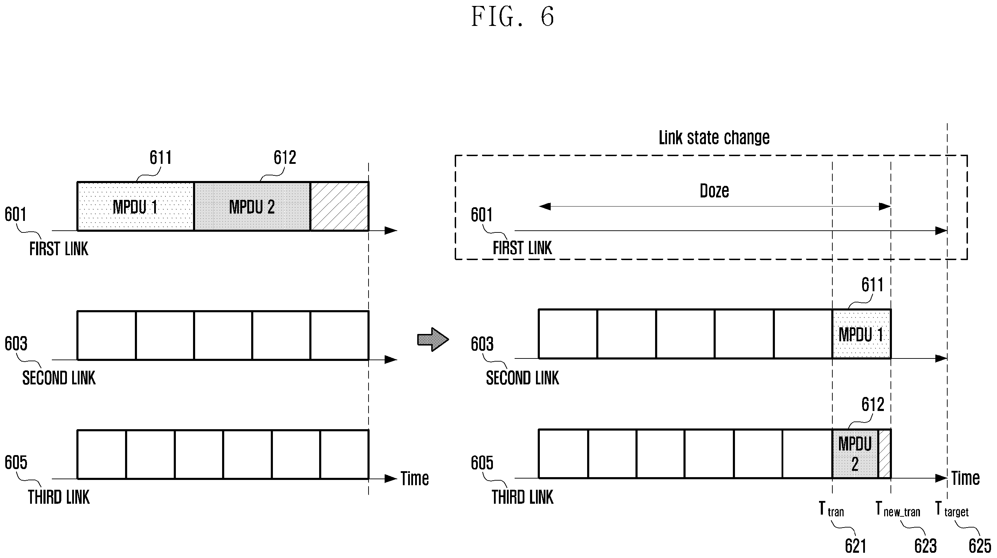

FIG. 6 is a diagram illustrating an example in which the electronic device switches some links to a deactivated state according to various embodiments of the disclosure.

The electronic device (e.g., electronic device 500 in FIG. 5) may transmit data to the external electronic device (e.g., external electronic device 320 in FIG. 3) or receive data transmitted by the external electronic device 320 through a first link 601 (e.g., first link 331 in FIG. 3), a second link 603 (e.g., second link 332 in FIG. 3), and/or a third link 605.

In FIG. 6, for convenience of description, it is assumed that the data rate of the first link 601 is lower than that of the second link 603, and the data rate of the second link 603 is lower than that of the third link 605.

The electronic device 500 may verify that the latency of data transmission or reception through the first link 601, second link 603, and/or third link 605 is lower than or equal to (or, below) the latency required to carry out the service. Based on verifying that the latency of data transmission or reception through the first link 601, second link 603, and/or third link 605 is lower than or equal to (or, below) the latency required to carry out the service, the electronic device 500 may perform a series of procedures to deactivate at least one link and transmit or receive data through the remaining links. The link to be deactivated may be the link having the lowest data rate among the activated links. The electronic device 500 may perform a series of operations to determine whether to deactivate the first link 601.

To determine whether to deactivate the first link 601, the electronic device 500 may determine whether the latency of data transmission or reception through the second link 603 and the third link 605 can satisfy the condition associated with the latency required to carry out the service. The condition associated with the required latency may include a condition that the latency of data transmission or reception through the second link 603 and the third link 605 is lower than or equal to (or, below) the latency required to carry out the service.

The electronic device 500 may deactivate the first link 601 based on determining that the latency of data transmission or reception through the second link 603 and the third link 605 is lower than or equal to (or, below) the latency time required to carry out the service in case of deactivation of the first link 601.

As deactivating the first link 601, the electronic device 500 may distribute the data transmitted or received through the first link 601 over the second link 603 and/or the third link 605.

The electronic device 500 may distribute a portion of data (611) transmitted or received through the first link 601 over the second link 603 based on the ratio of the data rate of the second link 603 to the sum of the data rate of the second link 603 and the data rate of the third link 606.

The electronic device 500 may distribute another portion of data (612) transmitted or received through the first link 601 over the third link 605 based on the ratio of the data rate of the third link 605 to the sum of the data rate of the second link 603 and the data rate of the third link 605.

With reference to FIG. 6, the latency (623) of data transmission or reception through the second link 603 and/or the third link 605 may be higher than the latency (621) of data transmission or reception through the first link 601, the second link 603 and/or the third link 605, but may be lower than the latency (625) required to carry out the service. Hence, the electronic device 500 may operate the links to have a lower latency than the latency (625) required to carry out the service while reducing power consumption by deactivating the first link 601.

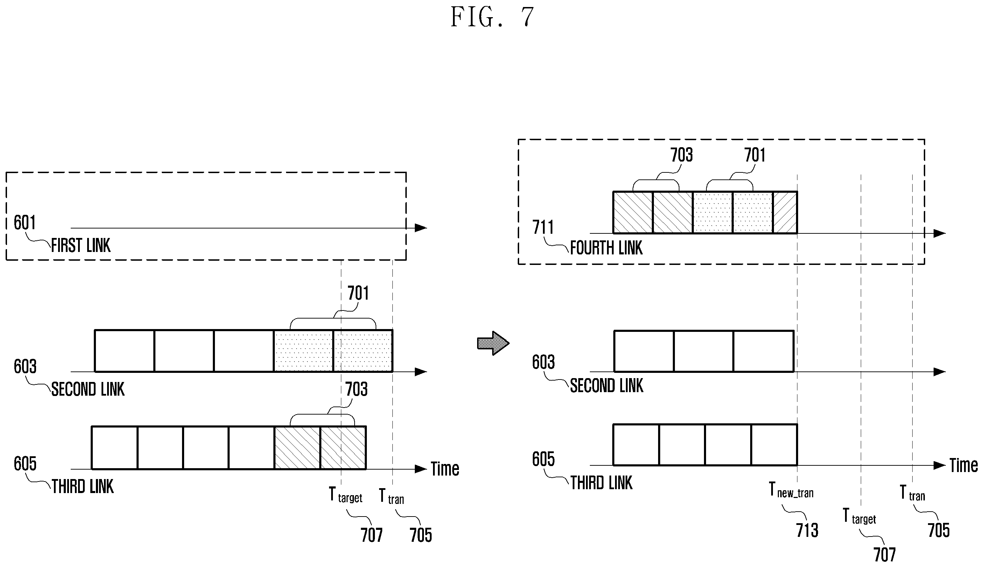

FIG. 7 is a diagram illustrating an example in which the electronic device switches some links to an activated state according to various embodiments of the disclosure.

The electronic device (e.g., electronic device 500 in FIG. 5) may be connected to the external electronic device (e.g., external electronic device 320 in FIG. 3) through a first link 601 (e.g., first link 331 in FIG. 3), a second link 603 (e.g., second link 332 in FIG. 3), and/or a third link 605.

The electronic device 500 may transmit data to the external electronic device 320 or may receive data transmitted by the external electronic device 320 through the second link 603 (e.g., second link 332 in FIG. 3) and/or the third link 605. The first link 601 may be in an idle state (doze state).

In FIG. 7, for convenience of description, it is assumed that the data rate of the first link 601 is lower than that of the second link 603, and the data rate of the second link 603 is lower than that of the third link 605.

The electronic device 500 may verify that the latency (705) of data transmission or reception through at least one link is higher than or equal to (or, above) the latency (707) required to carry out the service. Based on verifying that the latency (705) of data transmission or reception through at least one link is higher than or equal to (or, above) the latency (707) required to carry out the service, the electronic device 500 may activate a new link or activate a link in idle state (e.g., first link 601).

The electronic device 500 may determine the data rate required for the first link 601 being a link in idle state, or the data rate required for a fourth link 711 being a new link.

The electronic device 500 may determine the data rate required for the new link based on the difference between the latency of data transmission or reception through either the new link (e.g., fourth link 711) or the link in idle state (e.g., first link 601) and the activated links (e.g., second link 603, second link 605), and the latency of data transmission or reception through the activated links only.

The electronic device 500 may determine the data rate required for the new link (e.g., fourth link 711) or the link in idle state (e.g., first link 601) according to Equation 5 (or, based on the size of data to be transmitted or received, the sum of data rates of the activated links, the latency of data transmission or reception through the activated links, and the time margin).

The electronic device 500 may identify the data rate of the link in idle state (e.g., first link 601) and determine whether the data rate is greater than or equal to (or, above) the determined data rate. Based on determining that the data rate of the link in idle state (e.g., first link 601) is greater than or equal to (or, above) the determined data rate, the electronic device 500 may switch the first link 601 to the activated state.

To switch the link in idle state to the activated state, the electronic device 500 may transmit a multi-link traffic indication element frame indicating that data transmission or reception is possible through the link in idle state to the external electronic device 320.

Based on determining that the data rate of the link in idle state (e.g., first link 601) is less than or equal to (or, below) the determined data rate, the electronic device 500 can perform a series of operations to activate the fourth link 711 being a new link.

The electronic device 500 may transmit information indicating the data rate required for the new link (e.g., fourth link 711) to the external electronic device 320. The electronic device 500 may transmit a link setup request message including information indicating the data rate required for the new link (e.g., fourth link 711) to the external electronic device 320.

The link setup request message may be included in an association request frame defined in IEEE 802.11. According to an example, information indicating the data rate required for the new link may be included in the enhanced high throughput (EHT) capability field of the association request frame, and the information indicating the data rate required for the new link may be included in a reserved field of the EHT capability field, but there is no restriction on the zone in which the information indicating the data rate required for the new link is included.

The link setup message may be transmitted to the external electronic device 320 through the existing activated link or new link. The link setup message may be transmitted in various ways to reduce the time required to set up a new link.

According to an example, when transmitting data to the external electronic device 320, the electronic device 500 may transmit a link setup message together with the data. The electronic device 500 may transmit a link setup message to the external electronic device 320 within a specified time after completion of data transmission. The electronic device 500 may transmit a link setup message to the external electronic device 320 before receiving a response message indicating completion of data transmission from the external electronic device 320.

According to an example, the electronic device 500 may transmit a link setup message to the external electronic device 320 during a process of transmitting a response message indicating completion of data reception to the external electronic device 320 while receiving data from the external electronic device 320. The electronic device 500 may transmit a link setup message together with the response message to the external electronic device 320. The electronic device 500 may transmit a link setup message to the external electronic device 320 within a specified time after completion of transmission of the response message.

The external electronic device 320 may check the information indicating the data rate required for a new link and identify whether it is possible to activate a link satisfying the required data rate. Based on the possibility of activating a link satisfying the required data rate, the external electronic device 320 may transmit a response message including information indicating the link satisfying the required data rate to the electronic device 500.

Upon receiving information indicating a link satisfying the required data rate from the external electronic device 320, the electronic device 500 may perform a series of operations to activate the fourth link 711.

As part of the operation of activating a new link, the electronic device 500 may distribute data to be transmitted over the fourth link 711 being the new link and the second link 603 and third link 605 being the activated links. The electronic device 500 may distribute data to be transmitted over the second link 603, third link 605, and/or fourth link 711 based on the data rate of the fourth link 711, the data rate of the second link 603, and/or the data rate of the third link 605.

The power consumption of a link may increase as the time required to transmit or receive data through the link increases. Hence, minimizing power consumption may be achieved by setting the times at which transmissions of individual links are completed to be substantially the same. To set the times at which transmissions of individual links are completed to be substantially the same, the electronic device 500 may distribute data over each link based on the ratio of the data rate of one link to the sum of the data rates of the links.

With reference to FIG. 7, a portion (701) of data to be transmitted or received through the second link 603 when the new link is not activated may be transmitted or received through the fourth link 711. Another portion (703) of data to be transmitted or received through the third link 605 when the new link is not activated may be transmitted or received through the fourth link 711. The latency (713) of data transmission or reception through the second link 603, the third link 605, and/or the fourth link 711 may be lower than the latency (707) required to carry out the service. Hence, the electronic device 500 may increase the quality of service by controlling the links to have a latency lower than the latency required to carry out the service.

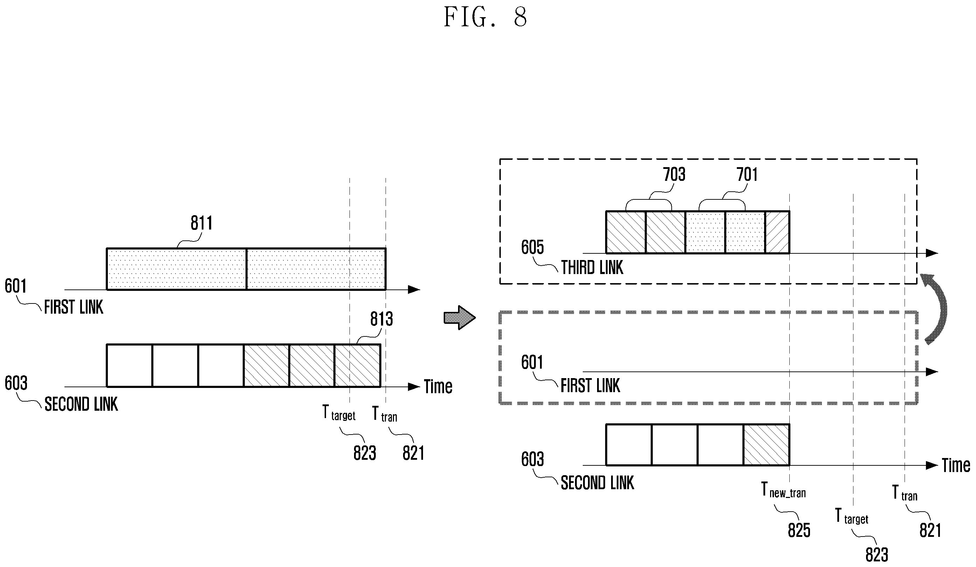

FIG. 8 is a diagram illustrating an example in which the electronic device switches a link to a deactivated state and switches another link to an activated state according to various embodiments of the disclosure.

The electronic device (e.g., electronic device 500 in FIG. 5) may be connected to the external electronic device (e.g., external electronic device 320 in FIG. 3) through a first link 601 (e.g., first link 331 in FIG. 3) and/or a second link 603 (e.g., second link 332 in FIG. 3).

The electronic device 500 may transmit data to the external electronic device 320 or receive data transmitted by the external electronic device 320 through the first link 601 and/or the second link 603.

In FIG. 8, for convenience of description, it is assumed that the data rate of the first link 601 is lower than that of the second link 603, and the data rate of the second link 603 is lower than that of the third link 605.

The electronic device 500 may verify that the latency (821) of data transmission or reception through at least one link is higher than or equal to (or, above) the latency (823) required to carry out the service. Based on verifying that the latency (821) of data transmission or reception through at least one link is higher than or equal to (or, above) the latency (823) required to carry out the service, the electronic device 500 may activate a new link (e.g., third link 605).

The electronic device 500 may deactivate some of the first link 601 and the second link 603 being the previously activated links, and activate the third link 605. If the maximum number of links that the communication circuit 510 can support are all activated (or, if the number of links equal to the maximum number of links that the communication circuit 510 can support are already activated), the processor 520 may deactivate some of the links and activate the third link 605. According to an example, the link to be deactivated may be the first link 601, which is the link with the lowest data rate.

The electronic device 500 may determine the data rate required for the third link 605 according to Equation 7 (or, based on the size of data to be transmitted or received, the sum of data rates of the links (e.g., second link 603) excluding the link to be deactivated (e.g., first link 601) among the activated links (e.g., first link 601 and second link 603), the latency of data transmission or reception through the activated links (e.g., first link 601 and second link 603), and the time margin).

The electronic device 500 may transmit information indicating the data rate required for the new link to the external electronic device 320. The electronic device 500 may transmit a link setup request message including information indicating the data rate required for the new link to the external electronic device 320.

With reference to FIG. 8, a portion (811) of data to be transmitted or received through the first link 601 and a portion (813) of data to be transmitted or received through the second link 603 when the new link is not activated may be transmitted or received through the activated third link 605.

The latency (825) of data transmission or reception through the second link 603 and the third link 605 may be lower than the latency (823) required to carry out the service. Hence, the electronic device 500 can increase the quality of service by controlling the links to have a latency lower than the latency required to carry out the service.

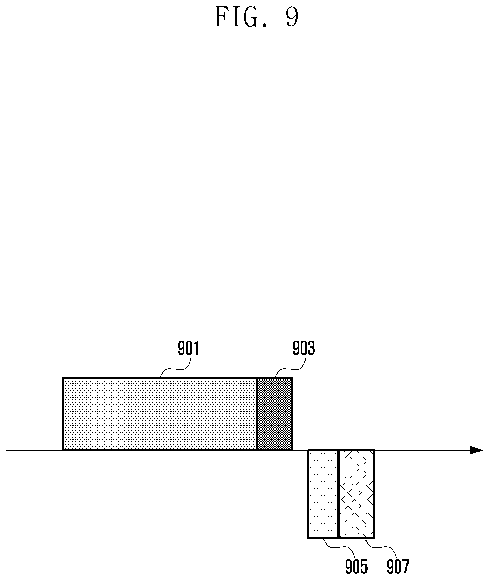

FIG. 9 is a diagram illustrating an example in which the electronic device transmits a signal to activate a link according to various embodiments of the disclosure.

Based on determining to activate a new link, the electronic device (e.g., electronic device 500 in FIG. 5) may transmit a link setup request message including information indicating the data rate required for the new link to the external electronic device (e.g., external electronic device 320 in FIG. 3).

The link setup request message may be included in an association request frame defined in IEEE 802.11. According to an example, information indicating the data rate required for the new link may be included in the enhanced high throughput (EHT) capability field of the association request frame, and the information indicating the data rate required for the new link may be included in a reserved field of the EHT capability field, but there is no restriction on the zone in which the information indicating the data rate required for the new link is included.

The link setup message may be transmitted to the external electronic device 320 through the existing activated link or new link. The link setup message may be transmitted in various ways to reduce the time required to set up a new link.

According to an example, when transmitting data (901) to the external electronic device 320, the electronic device 500 may transmit a link setup message together with the data (901). The electronic device 500 may transmit a link setup message (903) to the external electronic device 320 within a specified time after completion of data transmission. The electronic device 500 may transmit a link setup message (903) to the external electronic device 320 before receiving a response message (905) indicating completion of transmission of the data (901) from the external electronic device 320.

Through the above method, the electronic device 500 may achieve fast link setup by reducing the latency between the reception of the response message (905) and the transmission of the link setup message (903).

Upon reception of the link setup message (903), the external electronic device 320 may check the information indicating the data rate required for a new link included in the link setup message (903) and identify whether it is possible to activate a link satisfying the required data rate. Based on the possibility of activating a link satisfying the required data rate, the external electronic device 320 may transmit a response message (907) including information indicating the link satisfying the required data rate to the electronic device 500.

The external electronic device 320 may transmit a response message (907) including information indicating a link that satisfies the required data rate together with a response message (905) indicating that data reception is complete. The external electronic device 320 may transmit a response message (907) including information indicating a link that satisfies the required data rate within a specified time after transmitting a response message (905) indicating that data reception is complete. Alternatively, the external electronic device 320 may transmit a response message (905) indicating that data reception is complete within a specified time after transmitting a response message (907) including information indicating a link that satisfies the required data rate.

Through the above-described method, the electronic device 500 may achieve fast link setup by reducing the latency between the reception of a response message (907) including information indicating a link that satisfies the required data rate and the reception of a response message (905) indicating completion of data reception.

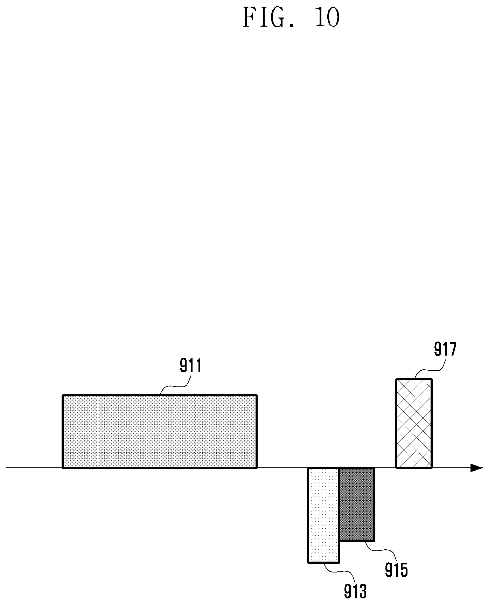

FIG. 10 is a diagram illustrating an example in which the electronic device transmits a signal to activate a link according to various embodiments of the disclosure.

Based on determining to activate a new link, the electronic device (e.g., electronic device 500 in FIG. 5) may transmit a link setup request message including information indicating the data rate required for the new link to the external electronic device (e.g., external electronic device 320 in FIG. 3).

The link setup request message may be included in an association request frame defined in IEEE 802.11. According to an example, information indicating the data rate required for the new link may be included in the enhanced high throughput (EHT) capability field of the association request frame, and the information indicating the data rate required for the new link may be included in a reserved field of the EHT capability field, but there is no restriction on the zone in which the information indicating the data rate required for the new link is included.

The link setup message may be transmitted to the external electronic device 320 through the existing activated link or new link. The link setup message may be transmitted in various ways to reduce the time required to set up a new link.

According to an example, when the electronic device 500 receives data (911) from the external electronic device 320, it may transmit a response message (913) indicating that reception of the data (911) is complete to the external electronic device 320.

While receiving data (911) from the external electronic device 320, the electronic device 500 may identify the latency of reception of the data (911) and compare the identified latency with the latency required to carry out the service.

Based on the confirmation that the identified latency is higher than or equal to (or, above) the latency required to carry out the service, the electronic device 500 may perform a series of operations to activate a new link.

As part of a series of operations to activate a new link, the electronic device 500 may determine the data rate required for the new link based on the difference between the latency of data transmission or reception through the new link and the activated links and the latency of data transmission or reception through the activated links only.

After receiving the data (911), the electronic device 500 may transmit a link setup message (915) when transmitting a response message (913) indicating that reception of the data (911) is complete. The electronic device 500 may transmit the link setup message (915) to the external electronic device 320 within a specified time after transmitting the response message (913).

Through the above manner, the electronic device 500 may achieve fast link setup by reducing the latency between transmission of the link setup message (915) and transmission of the response message (913).

Upon receiving the link setup message (915), the external electronic device 320 may check information indicating the data rate required for a new link included in the link setup message (915) and determine whether activation of a link satisfying the required data rate is possible. Based on the possibility of activation of a link satisfying the required data rate, the external electronic device 320 can transmit a response message (917) including information indicating the link satisfying the required data rate to the electronic device 500.

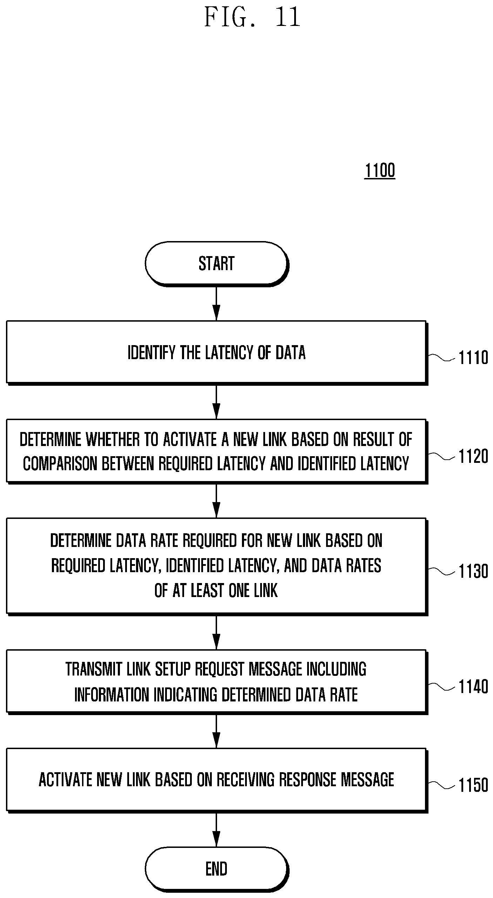

FIG. 11 is a flowchart illustrating an operation method of the electronic device according to various embodiments of the disclosure.

At operation 1110, the electronic device (e.g., electronic device 500 in FIG. 5) may identify the latency of data being transmitted or received.

According to one example, the electronic device 500 may monitor the time at which data transmission or reception is requested (e.g., 401 in FIG. 4A, 411 in FIG. 4B) and/or the time at which data transmission or reception is completed, identify the difference between the time at which data transmission or reception is requested and the time at which data transmission or reception is completed, and determine the identified difference to be the latency of data transmission or reception.

When the electronic device 500 transmits or receives data through multiple links, the latency of data transmission or reception may be set to the maximum value among the latency of data transmission or reception through the first link 331, the latency of data transmission or reception through the second link 333, and the latency of data transmission or reception through the third link.

The electronic device 500 may store history information including the latency of data transmission or reception through at least one link in the memory (e.g., memory 130 in FIG. 1) when transmitting or receiving data, and may identify the latency of data transmission or reception based on the history information.

At operation 1120, the electronic device 500 may determine whether to activate a new link based on the result of comparison between the latency required to perform the service and the identified latency.

The electronic device 500 may identify the latency required to carry out the service on the electronic device 500.

The electronic device 500 may identify the type of data (e.g., AC_BE (best effort), AC_BK, AC_VI, AC_VO) included in the data transferred by the application processor 120, and may identify the latency required to carry out the service on the electronic device 500 by referring to the mapping data in which the type of data and the required latency are mapped. The mapping data may be stored on the memory accessible to the processor 520 (e.g., memory 130 in FIG. 1) and may be generated or updated by the processor 520.

The electronic device 500 may identify the latency required to carry out the service in various ways besides those methods described above.

The electronic device 500 may determine whether to activate a new link based on the latency of data transmission or reception through at least one link and the latency required to carry out the service.

The electronic device 500 may identify that the latency of data transmission or reception through at least one link is higher than or equal to (or, above) the latency required to carry out the service. Upon identifying that the latency of data transmission or reception through at least one link is higher than or equal to (or, above) the latency required to carry out the service, the electronic device 500 may perform a series of procedures to activate a new link and transmit or receive data through the newly and previously activated links.

At operation 1130, the electronic device 500 may determine the data rate required for a new link based on the required latency, the identified latency, and the data rate of at least one link.

The processor 520 may determine the data rate required for the new link based on the difference between the latency of data transmission or reception through the new link (e.g., third link) and the activated link (e.g., first link 331, second link 333) and the latency of data transmission or reception through only the activated link.

At operation 1140, the electronic device 500 may transmit a link setup request message including information indicating the determined data rate required for the new link to the external electronic device 320.

The electronic device 500 may transmit information indicating the data rate required for the new link to the external electronic device 320. The electronic device 500 may transmit a link setup request message including information indicating the data rate required for the new link to the external electronic device 320.

The link setup request message may be included in an association request frame defined in IEEE 802.11. According to an example, information indicating the data rate required for the new link may be included in the enhanced high throughput (EHT) capability field of the association request frame, and the information indicating the data rate required for the new link may be included in a reserved field of the EHT capability field, but there is no restriction on the zone in which the information indicating the data rate required for the new link is included.

The link setup message may be transmitted to the external electronic device 320 through the existing activated link or new link. The link setup message may be transmitted in various ways to reduce the time required to set up a new link.

According to an example, when transmitting data to the external electronic device 320, the electronic device 500 may transmit a link setup message together with the data. The electronic device 500 may transmit a link setup message to the external electronic device 320 within a specified time after completion of data transmission. The electronic device 500 may transmit a link setup message to the external electronic device 320 before receiving a response message indicating completion of data transmission from the external electronic device 320.

According to an example, the electronic device 500 may transmit a link setup message to the external electronic device 320 during a process of transmitting a response message indicating completion of data reception to the external electronic device 320 while receiving data from the external electronic device 320. The electronic device 500 may transmit a link setup message together with the response message to the external electronic device 320. The electronic device 500 may transmit a link setup message to the external electronic device 320 within a specified time after completion of transmission of the response message.

At operation 1150, the electronic device 500 may activate a new link based on receiving a response message from the external electronic device 320.

The external electronic device 320 may check the information indicating the data rate required for a new link and identify whether it is possible to activate a link satisfying the required data rate. Based on the possibility of activating a link satisfying the required data rate, the external electronic device 320 may transmit a response message including information indicating the link satisfying the required data rate to the electronic device 500.

Upon receiving information indicating a link satisfying the required data rate from the external electronic device 320, the electronic device 500 may perform a series of operations to activate a new link.

As part of the operation of activating a new link, the electronic device 500 may distribute data to be transmitted over the new and activated links. The electronic device 500 may distribute data to be transmitted over the new and activated links based on the data rate of the new link and the data rate of each activated link. The electronic device 500 may distribute data to be transmitted over the new and activated links based on the data rate of the new link and the data rate of each activated link so as to minimize power consumption.

The power consumption of a link may increase as the time required to transmit or receive data through the link increases. Hence, minimizing power consumption may be achieved by setting the times at which transmissions of individual links are completed to be substantially the same. To set the times at which transmissions of individual links are completed to be substantially the same, the electronic device 500 may distribute data over each link based on the ratio of the data rate of one link to the sum of the data rates of the links.

The electronic device 500 may control the communication circuit 510 to transmit or receive a portion of data having a determined data size to or from the external electronic device 320 through the new link. The electronic device 500 may control the communication circuit 510 to transmit or receive another portion of the data having a determined data size to or from the external electronic device 320 through the previously activated link.

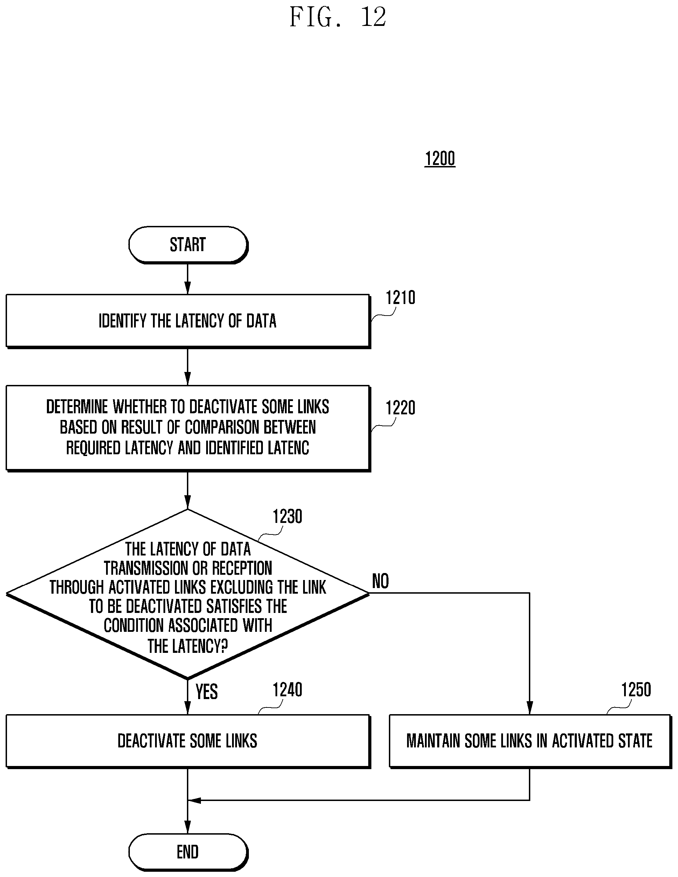

FIG. 12 is a flowchart illustrating an operation method of the electronic device according to various embodiments of the disclosure.

At operation 1210, the electronic device (e.g., electronic device 500 in FIG. 5) may identify the latency time of data being transmitted or received.

According to one example, the electronic device 500 may monitor the time at which data transmission or reception is requested (e.g., 401 in FIG. 4A, 411 in FIG. 4B) and/or the time at which data transmission or reception is completed, identify the difference between the time at which data transmission or reception is requested and the time at which data transmission or reception is completed, and determine the identified difference to be the latency of data transmission or reception.

When the electronic device 500 transmits or receives data through multiple links, the latency of data transmission or reception may be set to the maximum value among the latency of data transmission or reception through the first link 331, the latency of data transmission or reception through the second link 333, and the latency of data transmission or reception through the third link.

The electronic device 500 may store history information including the latency of data transmission or reception through at least one link in the memory (e.g., memory 130 in FIG. 1) when transmitting or receiving data, and may identify the latency of data transmission or reception based on the history information.

At operation 1220, the electronic device 500 may determine whether to deactivate some links based on the result of comparison between the latency required to carry out the service and the identified latency.

The electronic device 500 may identify the latency time required to carry out the service on the electronic device 500.

The electronic device 500 may identify the type of data (e.g., AC_BE (best effort), AC_BK, AC_VI, AC_VO) included in the data transferred by the application processor 120, and may identify the latency required to carry out the service on the electronic device 500 by referring to the mapping data in which the type of data and the required latency are mapped. The mapping data may be stored on the memory accessible to the processor 520 (e.g., memory 130 in FIG. 1) and may be generated or updated by the processor 520.

The electronic device 500 may identify the latency required to carry out the service in various ways besides those methods described above.

The electronic device 500 may identify that the latency of data transmission or reception through at least one link is lower than or equal to (or, below) the latency required to carry out the service. Based on identifying that the latency of data transmission or reception through at least one link is lower than or equal to (or, below) the latency required to carry out the service, the electronic device 500 may perform a series of procedures to deactivate at least one link and transmit or receive data through the remaining links. The link to be deactivated may be the link with the lowest data rate among the activated links, or may be the link with the highest power consumption.

At operation 1230, the electronic device 500 may determine whether the latency of data transmission or reception through the activated links excluding a link to be deactivated satisfies the condition associated with the latency.

To determine whether to deactivate one link, the electronic device 500 may check whether the latency of data transmission or reception through the remaining links can satisfy a condition associated with the latency required to carry out the service. The condition associated with the required latency may include a condition that the latency of data transmission or reception through the remaining links is lower than or equal to (or, below) the latency required to carry out the service.

The electronic device 500 may also determine whether to deactivate at least one link based on whether the power consumption that may occur when at least one link is deactivated satisfies a specified condition. The specified condition may include a condition that the power consumption that occurs when at least one link is deactivated is less than the power consumption that occurs when at least one link is not deactivated.

Based on determining that the latency of data transmission or reception through the activated links excluding the link to be deactivated satisfies the condition related to the latency (operation 1230-Y), at operation 1240, the electronic device 500 may deactivate some of the links.

Based on the determination to deactivate at least one link, the electronic device 500 may transmit a signal including information indicating the link to be deactivated to the external electronic device 320. According to an example, the processor 520 may deactivate at least one link by transmitting a traffic identifier (TID)-to-link mapping frame configured in a manner of disabling the traffic identifier (TID) mapped to the link to be deactivated to the external electronic device 320.

Based on determining that the latency of data transmission or reception through the activated links excluding the link to be deactivated does not satisfy the condition related to the latency (operation 1230-N), at operation 1250, the electronic device 500 may maintain some of the links in activated state.

The embodiments described above describes an embodiment in which at least some of the links among the multiple links are activated and/or deactivated according to the latency of data transmission or reception. The examples described below relate to setting at least one link among multiple links as a primary link and setting other links as secondary links. The primary link is a link that may transmit and/or receive data traffic (or, user data), and may be a link that is set to receive a beacon transmitted by an external electronic device (e.g., external electronic device 320 in FIG. 3) while not transmitting and/or receiving data traffic. The secondary link may be a link that is set so that it cannot receive a beacon transmitted by an external electronic device 320 while not transmitting and/or receiving data traffic. Next, a description will be given of an embodiment in which the electronic device may reduce power consumption by setting one link as a primary link and setting other links as a secondary link based on information (or, characteristics) of multiple links. The examples described below may be examples that can be combined with the previously described embodiments (embodiments described in FIGS. 3 to 12). For example, the electronic device may set a primary link and secondary links, and, while performing data transmission and/or reception through the primary link, activate at least one of the secondary links when the size of data to be transmitted and/or received increases, thereby performing data transmission and/or reception through the primary link and the activated secondary link.

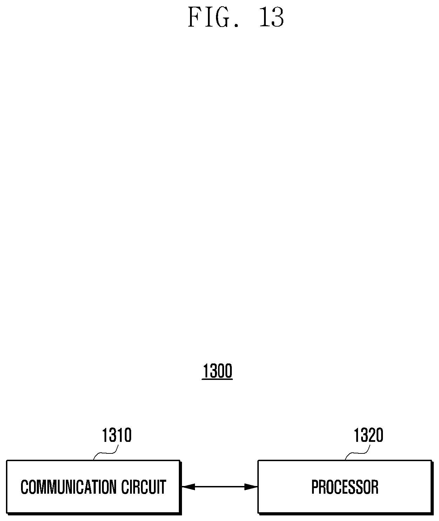

FIG. 13 is a block diagram of an electronic device according to an embodiment.

According to an embodiment, the electronic device 1300 (e.g., electronic device 310 in FIG. 3) may include a communication circuit 1310 (e.g., first communication circuit 311 or second communication circuit 312 in FIG. 4B), and/or a processor 1320 (e.g., processor 120 in FIG. 1).

The communication circuit 1310 may include various circuit structures used for modulating and/or demodulating signals in the electronic device 310. For example, the communication circuit 1310 may modulate a baseband signal into a radio frequency (RF) band signal to be output through an antenna (not shown), or may demodulate an RF band signal received through an antenna into a baseband signal and forward it to the processor 1320.

The communication circuit 1310 may transmit multiple packets through the first link (e.g., first link 331 in FIG. 3) to an external electronic device (e.g., external electronic device 320 in FIG. 3), or receive data transmitted by the external electronic device 320 through the first link 331. The communication circuit 1310 may transmit data through the second link (e.g., second link 332 in FIG. 3) to the external electronic device 320, or receive data transmitted by the external electronic device 320 through the second link 332. The communication circuit 1310 can output or receive a signal of a frequency band corresponding to the first link 331 through an antenna (e.g., first antenna 313 in FIG. 3), and may output or receive a signal of a frequency band corresponding to the second link 332 through an antenna (e.g., second antenna 314 in FIG. 3).

The communication circuit 1310 may transmit or receive data through multiple links including the first link 331 and the second link 332. According to an example, when the communication circuit 1310 supports up to three links for data transmission or reception, the communication circuit 1310 may transmit data through the third link to the external electronic device 320, or receive data transmitted by the external electronic device 320 through the third link.

The processor 1320 may perform an operation of receiving data transferred by the application processor (e.g., processor 120 in FIG. 1) and generating a packet for transmitting the received data to the external electronic device 320. The processor 1320 may be referred to as a communication processor included in a communication module (e.g., wireless communication module 192 in FIG. 1). According to an embodiment, the processor 1320 may perform channel coding based on data transferred by the application processor (e.g., application processor 120 in FIG. 1) to thereby generate a packet, or may check whether at least a portion of data received from the external electronic device 320 has an error and perform an error recovery operation (e.g., hybrid auto repeat request (HARQ)) if an error has occurred.

The processor 1320 operably connected to the communication circuit 1310 may control the operation of the communication circuit 1310. The processor 1320 may receive data from the application processor 120 and select, based on the service characteristics included in the data, a channel to be used for transmitting or receiving a packet corresponding to the data. The data may be data related to the service running on the electronic device 1300. For example, when a video call service is running on the electronic device 1300, the data may be data related to the video call service (e.g., voice data, video data).

To reduce power consumption due to activation of multiple links, the processor 1320 may set at least one of the multiple links as a primary link and set the remaining links excluding the primary link as secondary links.

The primary link is a link that can transmit and/or receive data traffic (or, user data), and may be a link that is set to receive a beacon transmitted by an external electronic device (e.g., external electronic device 320 in FIG. 3) while not transmitting and/or receiving data traffic. Data traffic may refer to traffic that transmits and/or receives data (e.g., user data) other than control-related data between the electronic device 1300 and the external electronic device 320. The secondary link may be a link that is set so that it cannot receive a beacon transmitted by the external electronic device 320 while not transmitting and/or receiving data traffic.

The processor 1320 may reduce power consumption caused by waiting for beacon reception by setting the secondary link, which is a link other than the primary link, not to receive a beacon while not transmitting and/or receiving data traffic. Next, an example of setting the primary link is described.

The processor 1320 may perform an association operation with the external electronic device 320 to establish multiple links.

The processor 1320 may find (or, scan) the external electronic device 320 and transmit a probe request message to the found external electronic device. Upon receiving the probe request message, the external electronic device 320 may transmit a probe response message including at least one parameter for obtaining information about multiple links (e.g., first link 331, second link 332, and/or third link (not shown)) supported by the external electronic device 320 to the electronic device 1300.

Alternatively, the processor 1320 may receive, from the external electronic device 320, a beacon message including at least one parameter for obtaining information about multiple links (e.g., first link 331, second link 332, and/or third link (not shown)) supported by the external electronic device 320.

The processor 1320 may control the communication circuit 1310 to activate multiple links so as to receive a probe request message and/or a beacon message. According to an example, when the communication circuit 1310 supports the first link 331, the second link 332, and/or the third link, the processor 1320 may receive a probe request message and/or a beacon message including at least one parameter for obtaining information about the first link 331 through the first link 331, receive a probe request message and/or a beacon message including at least one parameter for obtaining information about the second link 332 through the second link 332, and receive a probe request message and/or a beacon message including at least one parameter for obtaining information about the third link through the third link.

The processor 1320 may receive a beacon message or a probe response message and identify information about multiple links included in the beacon message or the probe response message.

According to an example, parameters for obtaining information about multiple links may include at least one of the type of standard for short-range wireless communication (e.g., Wi-Fi), the number of spatial streams for transmission and/or reception, the strength of a signal output by the electronic device 1300, information on the strength of a signal output by the external electronic device 320 (e.g., transmit power control (TPC) value included in a beacon), the quality of a probe response message or a beacon (e.g., received signal strength indicator (RSSI)), channel utilization (CU) indicating utilization of a channel, clear channel assessment (CCA) busy time, the radio on time of short-range wireless communication, the number of successful transmissions, and/or the number of retransmissions.

The processor 1320 may obtain parameters for obtaining information about multiple links through a probe response message or a beacon message, and obtain information about the links (e.g., link throughput) based on the parameters.

The information about multiple links may include the throughput of each of the multiple links. The processor 1320 may identify the throughput of each of the multiple links based on the information about the multiple links, and set one link as the primary link based on the throughput.

According to an example, the processor 1320 may identify the throughput of a link by using Equation 14 below.

[Equation 14]

$$ET_{UL,i} = DR_{UL,i} \times \frac{255 - CU_i}{255}, \quad ET_{DL,i} = DR_{DL,i} \times \frac{255 - CU_i}{255}$$

($ET_{UL,i}$: uplink throughput of $i^{th}$ link, $DR_{UL,i}$: uplink data rate of $i^{th}$ link, $CU_i$: channel utilization of $i^{th}$ link, $ET_{DL,i}$: downlink throughput of $i^{th}$ link, $DR_{DL,i}$: downlink data rate of $i^{th}$ link)

With reference to Equation 14, the processor 1320 may utilize the data rate and channel utilization of the $i^{th}$ link to determine the throughput of the $i^{th}$ link.

The processor 1320 may identify the channel utilization among the parameters included in the probe response message or beacon and use the channel utilization to determine the throughput of the $i^{th}$ link.

The processor 1320 may determine the data rate of the $i^{th}$ link by using Equation 15 below.

[Equation 15]

$$DataRate = \min(\log_2(1 + SNR\_tone), MaxBitsPerSc) \times \frac{NSS\_max \times Ntone}{DSYM_{DUR}}$$

(DataRate: uplink data rate of $i^{th}$ link, SNR_tone: signal to noise ratio (SNR) of a sub-carrier, MaxBitsPerSc: maximum number of bits that can be included in one sub-carrier, NSS_max: maximum number of spatial streams, $N_{tone}$: number of sub-carriers, $DSYM_{DUR}$: symbol duration)

In Equation 15, SNR_tone refers to the signal to noise ratio (SNR) for a sub-carrier, and may be calculated based on RSSI. For example, when SNR_tone is represented in dB, SNR_tone may be calculated using Equation 16 below in IEEE 802.11-2016 Annex R.7.

$$[\text{Equation 16}]$$

$$SNR\_tone = 10^{\frac{RSSI + P_{adjust}}{10}}$$

(SNR_tone: SNR (signal to noise ratio) of sub-carrier, $P_{adjust}$: parameter used when converting RSSI to SNR)

According to an example, the processor 1320 may identify (or, estimate) the throughput of each of the multiple links based on Equations 14 to 16 and the parameters obtained from a probe request message or beacon message. Equations 14 to 16 are illustrative, and the processor 1320 may identify (or, estimate) the throughput of each of the multiple links by using various schemes for checking the throughput.

According to an example, the processor 1320 may identify a link that can achieve the highest throughput and set the identified link as the primary link. Alternatively, when the operation mode of the electronic device 1300 is a power save mode, the processor 1320 may set a link that can achieve the lowest throughput as the primary link.

The information about multiple links may include the power consumption of each of the multiple links. The processor 1320 may identify a link that can achieve the lowest power consumption based on the information about multiple links and set the identified link as the primary link.

The information about multiple links may include the quality (e.g., RSSI) of the multiple links. The processor 1320 may identify a link with the highest quality based on the information about multiple links and set the identified link as the primary link. Alternatively, among the links with a quality greater than or equal to a specific value, the processor 1320 may select a link with the lowest power consumption as the primary link.

The processor 1320 may set the remaining links excluding the primary link among the multiple links as secondary links.

If the size of data is less than the throughput of the primary link, the processor 1320 may transmit or receive the data to or from the external electronic device 320 through the primary link. The processor 1320 may place the secondary links in the deactivated state (doze state or inactive state). A link in deactivated state may be not used to transmit and/or receive data or to receive a beacon until it is switched to an activated state.

According to an example, to place the secondary link in the doze state, the processor 1320 may transmit information indicating that the secondary link is placed in the doze state to the external electronic device 320. Transmitting information indicating that the secondary link is placed in the doze state may include transmitting a signal (e.g., control frame) including a power management bit set to 0 to the external electronic device 320.

According to an example, to place the secondary link in the inactive state, the processor 1320 may transmit a signal including information indicating a link placed in the inactive state to the external electronic device 320. According to an example, the processor 1320 may place the secondary link in the inactive state by transmitting a traffic identifier (TID) to link mapping frame configured in a manner of disabling the TID mapped to the link placed in the inactive state to the external electronic device 320.

As part of the operation for setting up multiple links, the processor 1320 may control the communication circuit 1310 to transmit an association frame to the external electronic device 320. The processor 1320 may transmit an association frame to the external electronic device 320 through the primary link. The association frame may include information about multiple links. The external electronic device 320 may identify information about multiple links included in the association frame and perform an association procedure with the electronic device 1300 through the multiple links.

The processor 1320 may establish multiple links through the association procedure with the external electronic device 320, and then perform data transmission and/or reception through the primary link.

However, if the size of data to be transmitted and/or received is greater than the throughput of the primary link, the processor 1320 may control the communication circuit 1310 to activate at least some of the secondary links, and control the communication circuit 1310 to transmit and/or receive data through the primary link and the activated secondary link. The processor 1320 may switch the secondary link from the idle state (doze state or inactive state) to the active state. A link placed in the active state may be used to perform data transmission and/or reception, and may be used to receive a beacon during data transmission and/or reception.

According to an example, to place the secondary link in the active state, the processor 1320 may transmit information indicating that the secondary link is placed in the active state to the external electronic device 320. Transmitting information indicating that the secondary link is placed in the active state may include transmitting a signal (e.g., control frame) including a power management bit set to 1 to the external electronic device 320.

According to an example, to place the secondary link in the active state, the processor 1320 may transmit a signal including information indicating a link placed in the active state to the external electronic device 320. According to an example, the processor 1320 may place the secondary link in the inactive state by transmitting a traffic identifier (TID) to link mapping frame configured in a manner of disabling the TID mapped to the link placed in the active state to the external electronic device 320.

The processor 1320 may determine whether to change the primary link upon detecting satisfaction of a specified condition.

According to an example, the specified condition may include a condition that the quality of the primary link is lower than or equal to a first level or a condition that the quality of the primary link is higher than or equal to a second level.

The condition that the quality of the primary link is lower than or equal to the first level may refer to a situation where the quality of the primary link is inadequate for performing data transmission and/or reception. Upon determining that the quality of the primary link is lower than or equal to the first level, the processor 1320 may check again the information about multiple links and reset (or, change) the primary link based on the information about multiple links.

The condition that the quality of the primary link is higher than or equal to the second level may refer to a situation where the quality of the primary link is very good. The quality of the primary link and the quality of the secondary link may be highly correlated. If the quality of the primary link is good, the quality of the secondary link may also be good. Hence, upon determining that the quality of the primary link is higher than or equal to the second level, the processor 1320 may check again the information about multiple links and reset (or, change) the primary link based on the information about multiple links.

According to an example, the specified condition may include a condition that another short-range wireless communication utilizing a frequency band partially overlapping with the frequency band used by the multiple links is activated. According to an example, the frequency band (e.g., 2.4 GHz) of short-range wireless communication (e.g., Wi-Fi) that performs data transmission and/or reception over multiple links may overlap in part with the frequency band (e.g., 2.4 GHz) of another short-range wireless communication (e.g., Bluetooth). According to an example, the frequency band (e.g., 6 GHz) of short-range wireless communication (e.g., Wi-Fi) that performs data transmission and/or reception over multiple links may overlap in part with the frequency band (e.g., 6 GHz) of another short-range wireless communication (e.g., ultra wide band (UWB)).

When the frequency band of first short-range wireless communication (e.g., Wi-Fi) that performs data transmission and/or reception through multiple links overlaps in part with the frequency band of second short-range wireless communication (e.g., Bluetooth, UWB), the electronic device 1300 cannot perform data transmission and/or reception through the first short-range wireless communication and the second short-range wireless communication simultaneously. Hence, the processor 1320 may check again the information about multiple links (e.g., throughput or quality) and reset (or, change) the primary link based on the information about multiple links.

When the frequency band of first short-range wireless communication (e.g., Wi-Fi) that performs data transmission and/or reception through multiple links overlaps in part with the frequency band of second short-range wireless communication (e.g., Bluetooth, UWB), the processor 1320 may correct the throughput of each of the plural links based on the usage ratio of the first short-range wireless communication for a specified time. The link subject to correction may be a link having an overlapping frequency band.

According to an example, for a specified time (1 second), the electronic device 1300 may activate the first short-range wireless communication through a specific link having an overlapping frequency band for 0.8 seconds, and may activate the second short-range wireless communication through a specific link having an overlapping frequency band for 0.2 seconds. The processor 1320 may correct the throughput by multiplying the throughput determined according to Equations 14 to 16 by the usage ratio of the first short-range wireless communication (0.8/1 = 0.8).

According to an example, the specified condition may include a condition that the number of retransmissions of data through the primary link is greater than or equal to (or, exceeds) a specified number. The condition that the number of retransmissions of data through the primary link is greater than or equal to (or, exceeds) a specified number may refer to a situation where there is a difficulty in data transmission and/or reception through the primary link. Hence, upon determining that the number of retransmissions of data through the primary link is greater than or equal to a specified number, the processor 1320 may check again the information about multiple links and reset (or, change) the primary link based on the information about multiple links.

According to an example, the specified condition may include a condition that data transmission and/or reception through the primary link is completed (or, ended). When data transmission and/or reception through the primary link is completed (or, ended), the processor 1320 may check again the information about multiple links and reset (or, change) the primary link based on the information about multiple links.

Upon determining that there is no link that can be set as the primary link among the multiple links, the processor 1320 may perform a series of procedures to establish a connection with another external electronic device or to transmit and/or receive data via a cellular network.

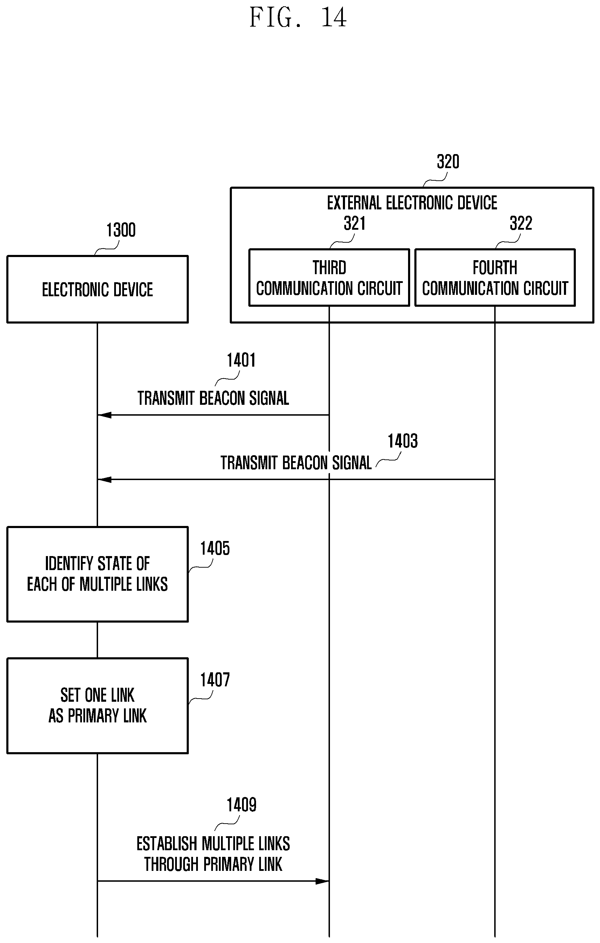

FIG. 14 is a diagram illustrating an example in which the electronic device sets one of multiple links as the primary link and sets up plural links through the primary link according to an embodiment.

With reference to FIG. 14, at operation 1401, the external electronic device (e.g., external electronic device 320 in FIG. 3) may transmit or broadcast a beacon signal (or, beacon message) through a first link (e.g., first link 331 in FIG. 3).

The beacon signal may include parameters for obtaining information about the first link 331. According to an example, parameters for obtaining information about the first link 331 may include at least one of the type of standard for short-range wireless communication (e.g., Wi-Fi), the number of spatial streams for transmission and/or reception, the strength of a signal output by the electronic device 1300, information on the strength of a signal output by the external electronic device 320 (e.g., transmit power control (TPC) value included in a beacon), the quality of a probe response message or a beacon (e.g., received signal strength indicator (RSSI)), channel utilization (CU) indicating utilization of a channel, clear channel assessment (CCA) busy time, the radio on time of short-range wireless communication, the number of successful transmissions, and/or the number of retransmissions.

The external electronic device 320 may control the third communication circuit (e.g., third communication circuit 321 in FIG. 3) to transmit or broadcast a beacon signal through the first link 331.

At operation 1403, the external electronic device 320 may transmit or broadcast a beacon signal through a second link (e.g., second link 333 in FIG. 3).

The beacon signal may include parameters for obtaining information about the second link 332. According to an example, parameters for obtaining information about the second link 332 may include at least one of the type of standard for short-range wireless communication (e.g., Wi-Fi), the number of spatial streams for transmission and/or reception, the strength of a signal output by the electronic device 1300, information on the strength of a signal output by the external electronic device 320 (e.g., transmit power control (TPC) value included in a beacon), the quality of a probe response message or a beacon (e.g., received signal strength indicator (RSSI)), channel utilization (CU) indicating utilization of a channel, clear channel assessment (CCA) busy time, the radio on time of short-range wireless communication, the number of successful transmissions, and/or the number of retransmissions.

The external electronic device 320 may control the fourth communication circuit (e.g., fourth communication circuit 322 in FIG. 3) to transmit or broadcast a beacon signal through the second link 332.

At operation 1405, the electronic device 1300 may identify the state of each of the multiple links.

The information about multiple links may include the throughput of each of the multiple links. According to an example, the electronic device 1300 may identify (or, estimate) the throughput of the first link 331 and the throughput of the second link 332 based on Equations 14 to 16 and the parameters obtained from the beacon message. Equations 14 to 16 are illustrative, and the electronic device 1300 may identify (or, estimate) the throughput of each of the multiple links by using various methods for identifying the throughput.

The information about multiple links may include the power consumption of each of the multiple links. The electronic device 1300 may identify the power consumption of the first link 331 and the power consumption of the second link 332 based on the information about multiple links.

The information about multiple links may include the quality (e.g., RSSI) of the multiple links. The electronic device 1300 may identify the quality of the first link 331 and the quality of the second link 332 based on the information about multiple links.

At operation 1407, the electronic device 1300 may set one of the multiple links as the primary link based on the information about multiple links.

According to an example, the electronic device 1300 may identify a link that can achieve the highest throughput and set the identified link as the primary link. Alternatively, if the operation mode of the electronic device 1300 is a power save mode, the electronic device 1300 may set a link that can achieve the lowest throughput as the primary link.

The electronic device 1300 may identify a link that can achieve the lowest power consumption based on the information about multiple links and set the identified link as the primary link.

The electronic device 1300 may identify a link with the highest quality based on the information about multiple links and set the identified link as the primary link. Alternatively, the electronic device 1300 may select the link with the lowest power consumption among the links having a quality higher than or equal to (or, above) a specific value as the primary link.

The electronic device 1300 may set the remaining links excluding the primary link among the multiple links as secondary links.

At operation 1409, the electronic device 1300 may establish multiple links through the primary link.

As part of the operation for establishing multiple links, the electronic device 1300 may control the communication circuit 1310 to transmit an association frame to the external electronic device 320. The electronic device 1300 may transmit an association frame to the external electronic device 320 through the primary link. The association frame may include information about multiple links. The external electronic device 320 may identify the information about multiple links included in the association frame and perform an association procedure with the electronic device 1300 through the multiple links.

The electronic device 1300 may establish multiple links through the association procedure with the external electronic device 320, and then perform data transmission and/or reception through the primary link.

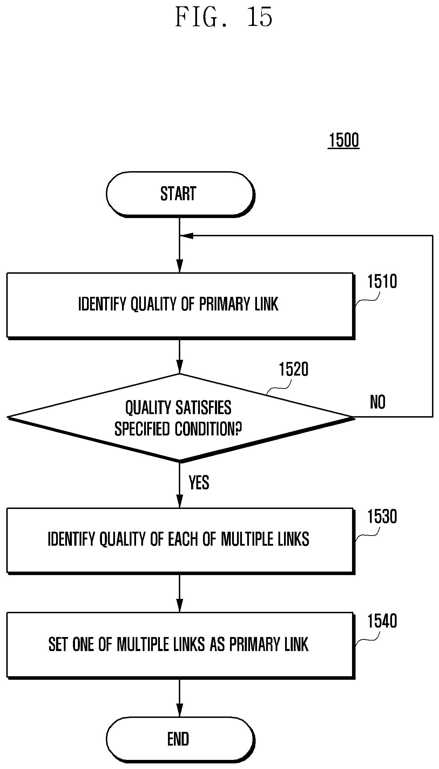

FIG. 15 is a diagram illustrating an example 1500 in which the electronic device changes the primary link when the quality of the primary link satisfies a specified condition according to an embodiment.

At operation 1510, the electronic device (e.g., electronic device 1300 in FIG. 13) may identify the quality of the primary link.

According to an example, the quality of the primary link may be determined based on the characteristics of the signal received through the primary link. The electronic device 1300 may identify the quality of the primary link by checking the received signal strength indicator (RSSI) of a signal received through the primary link.

At operation 1520, the electronic device 1300 may check whether the quality of the primary link satisfies a specified condition.

According to an example, the specified condition may include a condition that the quality of the primary link is lower than or equal to a first level or a condition that the quality of the primary link is higher than or equal to a second level.

The condition that the quality of the primary link is lower than or equal to the first level may refer to a situation where the quality of the primary link is inadequate for performing data transmission and/or reception. Upon determining that the quality of the primary link is lower than or equal to the first level, the electronic device 1300 may check again the information about multiple links and reset (or, change) the primary link based on the information about multiple links.

The condition that the quality of the primary link is higher than or equal to the second level may refer to a situation where the quality of the primary link is very good. The quality of the primary link and the quality of the secondary link may be highly correlated. If the quality of the primary link is good, the quality of the secondary link may also be good. Hence, upon determining that the quality of the primary link is higher than or equal to the second level, the electronic device 1300 may check again the information about multiple links and reset (or, change) the primary link based on the information about multiple links.

If the quality of the primary link does not satisfy the specified condition (operation 1520-N), the electronic device 1300 may monitor the quality of the primary link again to check whether it satisfies the specified condition.

Based on the quality of the primary link satisfying the specified condition (operation 1520-Y), at operation 1530, the electronic device 1300 may identify the quality of each of the multiple links.

The information about multiple links may include the throughput of each of the multiple links. According to an example, the electronic device 1300 may identify (or, estimate) the throughput of the first link 331 and the throughput of the second link 332 based on Equations 14 to 16 and the parameters obtained from the beacon message. Equations 14 to 16 are illustrative, and the electronic device 1300 may identify (or, estimate) the throughput of each of the multiple links by using various methods for identifying the throughput.

The information about multiple links may include the power consumption of each of the multiple links. The electronic device 1300 may identify the power consumption of the first link 331 and the power consumption of the second link 332 based on the information about multiple links.

The information about multiple links may include the quality (e.g., RSSI) of the multiple links. The electronic device 1300 may identify the quality of the first link 331 and the quality of the second link 332 based on the information about multiple links.

At operation 1540, the electronic device 1300 may set one of the multiple links as the primary link.

According to an example, the electronic device 1300 may identify a link that can achieve the highest throughput and set the identified link as the primary link. Alternatively, if the operation mode of the electronic device 1300 is a power save mode, the electronic device 1300 may set a link that can achieve the lowest throughput as the primary link.

The electronic device 1300 may identify a link that can achieve the lowest power consumption based on the information about multiple links and set the identified link as the primary link.

The electronic device 1300 may identify a link with the highest quality based on the information about multiple links and set the identified link as the primary link. Alternatively, the electronic device 1300 may select the link with the lowest power consumption **among the links having a quality higher than or equal to (or, above) a specific value** as the primary link.

The electronic device 1300 may set the remaining links excluding the primary link among the multiple links as secondary links.

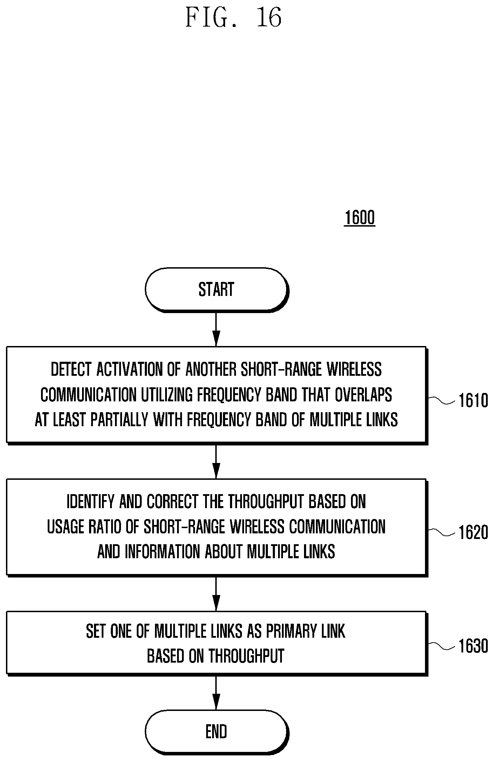

FIG. 16 is a diagram illustrating an example 1600 in which the electronic device changes the primary link in response to activation of another short-range wireless communication utilizing a frequency band that overlaps at least partially with the frequency band of the multiple links according to one embodiment.

At operation 1610, the electronic device (e.g., electronic device 1300 in FIG. 13) may detect activation of another short-range wireless communication utilizing a frequency band that overlaps at least partially with the frequency band of the multiple links.

According to an example, the frequency band (e.g., 2.4 GHz) of short-range wireless communication (e.g., Wi-Fi) that performs data transmission and/or reception over multiple links may overlap in part with the frequency band (e.g., 2.4 GHz) of another short-range wireless communication (e.g., Bluetooth). According to an example, the frequency band (e.g., 6 GHz) of short-range wireless communication (e.g., Wi-Fi) that performs data transmission and/or reception over multiple links may overlap in part with the frequency band (e.g., 6 GHz) of another short-range wireless communication (e.g., ultra wide band (UWB)).

When the frequency band of first short-range wireless communication (e.g., Wi-Fi) that performs data transmission and/or reception through multiple links overlaps in part with the frequency band of second short-range wireless communication (e.g., Bluetooth, UWB), the electronic device 1300 cannot perform data transmission and/or reception through the first short-range wireless communication and the second short-range wireless communication simultaneously. Hence, the electronic device 1300 may check again the information about multiple links (e.g., throughput or quality) and reset (or, change) the primary link based on the information about multiple links.

At operation 1620, the electronic device 1300 may identify and correct the throughput based on the usage ratio of short-range wireless communication and the information about multiple links.

When the frequency band of first short-range wireless communication (e.g., Wi-Fi) that performs data transmission and/or reception through multiple links overlaps in part with the frequency band of second short-range wireless communication (e.g., Bluetooth, UWB), the electronic device 1300 may correct the throughput of each of the plural links based on the usage ratio of the first short-range wireless communication for a specified time. The link subject to correction may be a link having an overlapping frequency band.

According to an example, for a specified time (1 second), the electronic device 1300 may activate the first short-range wireless communication through a specific link having an overlapping frequency band for 0.8 seconds, and may activate the second short-range wireless communication through a specific link having an overlapping frequency band for 0.2 seconds. The electronic device 1300 may correct the throughput by multiplying the throughput determined according to Equations 14 to 16 by the usage ratio of the first short-range wireless communication (0.8/1 = 0.8).

At operation 1630, the electronic device 1300 may set one of the multiple links as the primary link based on the determined throughput or corrected throughput.

According to an example, the electronic device 1300 may identify a link that can achieve the highest throughput and set the identified link as the primary link. Alternatively, if the operation mode of the electronic device 1300 is a power save mode, the electronic device 1300 may set a link that can achieve the lowest throughput as the primary link.

The electronic device 1300 may set the remaining links excluding the primary link among the multiple links as secondary links.

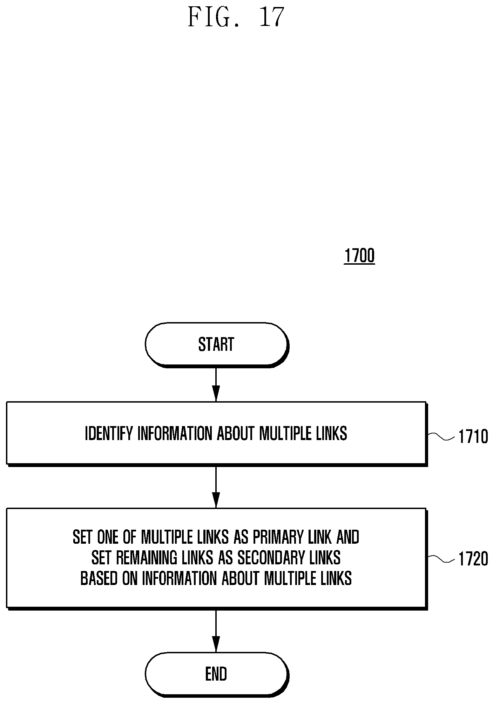

FIG. 17 is a flowchart illustrating an operating method of the electronic device according to an embodiment.

At operation 1710, the electronic device (e.g., electronic device 1300 in FIG. 13) may identify information about multiple links.

The electronic device 1300 may perform an association operation with the external electronic device 320 to establish multiple links.

The electronic device 1300 may find (or, scan) the external electronic device 320 and transmit a probe request message to the found external electronic device. Upon receiving the probe request message, the external electronic device 320 may transmit a probe response message including at least one parameter for obtaining information about multiple links (e.g., first link 331, second link 332, and/or third link (not shown)) supported by the external electronic device 320 to the electronic device 1300.

Alternatively, the electronic device 1300 may receive, from the external electronic device 320, a beacon message including at least one parameter for obtaining information about multiple links (e.g., first link 331, second link 332, and/or third link (not shown)) supported by the external electronic device 320.

The electronic device 1300 may control the communication circuit 1310 to activate multiple links so as to receive a probe request message and/or a beacon message. According to an example, when the communication circuit 1310 supports the first link 331, the second link 332, and/or the third link, the electronic device 1300 may receive a probe request message and/or a beacon message including at least one parameter for obtaining information about the first link 331 through the first link 331, receive a probe request message and/or a beacon message including at least one parameter for obtaining information about the second link 332 through the second link 332, and receive a probe request message and/or a beacon message including at least one parameter for obtaining information about the third link through the third link.

The electronic device 1300 may receive a beacon message or a probe response message and identify information about multiple links included in the beacon message or the probe response message.

According to an example, parameters for obtaining information about multiple links may include at least one of the type of standard for short-range wireless communication (e.g., Wi-Fi), the number of spatial streams for transmission and/or reception, the strength of a signal output by the electronic device 1300, information on the strength of a signal output by the external electronic device 320 (e.g., transmit power control (TPC) value included in a beacon), the quality of a probe response message or a beacon (e.g., received signal strength indicator (RSSI)), channel utilization (CU) indicating utilization of a channel, clear channel assessment (CCA) busy time, the radio on time of short-range wireless communication, the number of successful transmissions, and/or the number of retransmissions.

The electronic device 1300 may obtain parameters for obtaining information about multiple links through a probe response message or a beacon message, and obtain information about the links (e.g., link throughput) based on the parameters.

The information about multiple links may include the throughput of each of the multiple links. The electronic device 1300 may identify the throughput of each of the multiple links based on the information about the multiple links, and set one link as the primary link based on the throughput.

According to an example, the electronic device 1300 may identify (or, estimate) the throughput of each of the multiple links based on Equations 14 to 16 and the parameters obtained from a probe request message or beacon message. Equations 14 to 16 are illustrative, and the electronic device 1300 may identify (or, estimate) the throughput of each of the multiple links by using various schemes for checking the throughput.

The information about multiple links may include the power consumption of each of the multiple links.

The information about multiple links may include the quality (e.g., RSSI) of the multiple links.

At operation 1720, the electronic device 1300 may set one of the multiple links as the primary link and set the remaining links as secondary links based on the information about the multiple links.

The primary link is a link that may transmit and/or receive data traffic (or, user data), and may be a link that is set to receive a beacon transmitted by an external electronic device (e.g., external electronic device 320 in FIG. 3) while not transmitting and/or receiving data traffic. The secondary link may be a link that is set so that it cannot receive a beacon transmitted by an external electronic device 320 while not transmitting and/or receiving data traffic.

According to an example, the electronic device 1300 may identify a link that can achieve the highest throughput and set the identified link as the primary link. Alternatively, when the operation mode of the electronic device 1300 is a power save mode, the electronic device 1300 may set a link that can achieve the lowest throughput as the primary link.

The electronic device 1300 may identify a link that can achieve the lowest power consumption based on the information about multiple links and set the identified link as the primary link.

The electronic device 1300 may identify a link with the highest quality based on the information about multiple links and set the identified link as the primary link. Alternatively, **among the links with a quality greater than or equal to a specific value,** the electronic device 1300 may select a link with the lowest power consumption as the primary link.

An electronic device according to an embodiment may include a communication circuit that transmits or receives data through at least one link established between an external electronic device and the electronic device. The electronic device may include a processor operably connected to the communication circuit. The processor may identify the latency of data transmitted or received through the at least one link. The processor may determine whether to activate a new link based on the result of comparison between the identified latency and the latency required to carry out the service related to the data. Based on determining to activate a new link, the processor may determine the data rate required for the new link based on the identified latency, the required latency, and the data rates of the at least one link. The processor may transmit a link setup request message including information indicating the determined data rate to the external electronic device. The processor may activate the new link based on reception of a response message transmitted by the external electronic device.

In the electronic device according to an embodiment, the processor may be configured to determine the size of data to be transmitted through the new link based on the data rate of the new link and the data rate of the activated link.

In the electronic device according to an embodiment, if there is no link in idle state among the at least one link, the processor may be configured to determine whether to activate a new link based on the result of comparison between the identified latency and the latency required to carry out the service related to the data.

In the electronic device according to an embodiment, if the number of the at least one link is equal to the maximum number of links that the communication circuit can support, the processor may be configured to deactivate a link having the lowest data rate among the at least one link and activate the new link.

In the electronic device according to an embodiment, if there is a link in idle state among the at least one link, the processor may determine whether the link in idle state supports the determined data rate. Based on determining that the link in idle state supports the determined data rate, the processor may be configured to switch the link in idle state to an activated state.

In the electronic device according to an embodiment, the processor may determine whether to deactivate some of the at least one link based on the result of comparison between the identified latency and the latency required to carry out the service related to the data. Based on determining to deactivate some of the links, the processor may be configured to deactivate some of the links based on the identified latency, the required latency, and data transmission or reception through activated links excluding those links to be deactivated that satisfies a condition related to the latency.

In the electronic device according to an embodiment, the processor may be configured to determine the size of data to be transmitted through each of the activated links based on the data rate of each of the activated links excluding those links to be deactivated.

In the electronic device according to an embodiment, based on determining to deactivate some of the links, the processor may identify whether the power required for data transmission or reception through activated links excluding those links to be deactivated is lower than the power required for data transmission or reception through activated links including those links to be deactivated. The processor may be configured to determine whether to perform deactivation of some links based on the identification result.

In the electronic device according to an embodiment, the processor may be configured to transmit the link setup request message to the external electronic device before receiving a response message indicating that the data has been received after completion of transmission of the data.

In the electronic device according to an embodiment, the processor may be configured to transmit the link setup request message to the external electronic device while transmitting a response message indicating that the data has been received after completion of reception of the data.

An operation method of the electronic device may include identifying the latency of data transmitted or received through at least one link established between an external electronic device and the electronic device. The operation method of the electronic device may include determining whether to activate a new link based on the result of comparison between the identified latency and the latency required to carry out the service related to the data. Based on determining to activate a new link, the operation method of the electronic device may include determining the data rate required for the new link based on the identified latency, the required latency, and the data rates of the at least one link. The operation method of the electronic device may include transmitting a link setup request message including information indicating the determined data rate to the external electronic device. The operation method of the electronic device may include activating the new link based on reception of a response message transmitted by the external electronic device.

The operation method of the electronic device may further include determining the size of data to be transmitted through the new link based on the data rate of the new link and the data rate of the activated link.

In the operation method of the electronic device, determining whether to activate a new link may include determining, if there is no link in idle state among the at least one link, whether to activate the new link based on the result of comparison between the identified latency and the latency required to carry out the service related to the data.

The operation method of the electronic device may further include deactivating a link having the lowest data rate among the at least one link and activating the new link if the number of the at least one link is equal to the maximum number of links that a communication circuit can support.

The operation method of the electronic device may further include determining, if there is a link in idle state among the at least one link, whether the link in idle state supports the determined data rate. Based on the link in idle state supporting the determined data rate, the operation method of the electronic device may further include switching the link in idle state to an activated state.

The operation method of the electronic device may further include determining whether to deactivate some of the at least one link based on the result of comparison between the identified latency and the latency required to carry out the service related to the data. Based on determining to deactivate some of the at least one link, the operation method of the electronic device may further include deactivating some of the links based on the identified latency, the required latency, and data transmission or reception through activated links excluding those links to be deactivated that satisfies a condition related to the latency.

The operation method of the electronic device may further include determining the size of data to be transmitted through each of activated links based on the data rate of each of the activated links excluding those links to be deactivated.

Based on determining to deactivate some of the links, the operation method of the electronic device may further include identifying whether the power required for data transmission or reception through activated links excluding those links to be deactivated is lower than the power required for data transmission or reception through activated links including those links to be deactivated. The operation method of the electronic device may further include determining whether to perform deactivation of some links based on the identification result.

In the operation method of the electronic device, transmitting a link setup request message to the external electronic device may include transmitting the link setup request message to the external electronic device before receiving a response message indicating that the data has been received after completion of transmission of the data.

In the operation method of the electronic device, transmitting a link setup request message to the external electronic device may include transmitting the link setup request message to the external electronic device while transmitting a response message indicating that the data has been received after completion of reception of the data.

An electronic device according to an example may include a communication circuit that transmits or receives data through at least one link among multiple links established between an external electronic device and the electronic device. The electronic device may include a processor. The processor may identify information about each of the multiple links while the electronic device carries out a service. Based on the information about each of the multiple links, the processor may set one of the multiple links as the primary link that is allowed to receive a beacon during an idle period when no data traffic is transmitted and/or received, and may set the remaining links excluding the one link as secondary links that are not allowed to receive a beacon during the idle period.

In the electronic device according to an example, the processor may place the secondary links in a deactivated state (doze state or inactive state). The processor may be configured to transmit or receive data to or from the external electronic device through the primary link.

In the electronic device according to an example, the processor may determine whether to activate one of the secondary links based on the size of data to be transmitted or received to or from the external electronic device.

In the electronic device according to an example, the processor may identify the throughput of each of the multiple links based on the information about each of the multiple links. The processor may set one of the multiple links as the primary link based on the throughput of each of the multiple links.

In the electronic device according to an example, the processor may detect activation of another short-range wireless communication utilizing a frequency band that overlaps at least in part with the frequency band of the multiple links. The processor may identify the throughput based on the usage ratio of the short-range wireless communication and the information about each of the multiple links. The processor may set one of the multiple links as the primary link based on the throughput of each of the multiple links.

In the electronic device according to an example, the processor may set a link having the highest throughput among the multiple links as the primary link.

In the electronic device according to an example, the processor may identify the power consumption corresponding to each of the multiple links based on the information about each of the multiple links. The processor may set one of the multiple links as the primary link based on the power consumption of each of the multiple links.

In the electronic device according to an example, the processor may identify whether the quality of the primary link satisfies a specified condition. The processor may be configured to determine whether to change the primary link based on determining that the quality of the primary link satisfies the specified condition.

In the electronic device according to an example, the specified condition may include a condition that the quality of the primary link is lower than or equal to a first level or a condition that the quality of the primary link is higher than or equal to a second level.

In the electronic device according to an example, the processor may determine the number of times data has been retransmitted over the primary link. The processor may be configured to determine whether to change the primary link based on the determined number of times.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:

   a communication circuit that transmits or receives data through at least one link among multiple links established between an external electronic device and the electronic device; and
   a processor operably connected to the communication circuit,
   wherein the processor is configured to:

   identify a latency of data transmitted or received through the at least one link;
   determine whether to activate a new link based on a result of comparison between the identified latency and a latency required to carry out a service related to the data;
   determine, based on determining to activate a new link, a data rate required for the new link based on the identified latency, the required latency, and data rates of the at least one link;
   transmit a link setup request message including information indicating the determined data rate to the external electronic device; and
   activate the new link based on reception of a response message transmitted by the external electronic device.

2. The electronic device of claim 1, wherein the processor is configured to determine a size of data to be transmitted through the new link based on the data rate of the new link and the data rate of an activated link.

3. The electronic device of claim 1, wherein in case that there is no link in idle state among the at least one link, the processor is configured to determine whether to activate a new link based on a result of comparison between the identified latency and the latency required to carry out a service related to the data.

4. The electronic device of claim 1, wherein in case that a number of the at least one link is equal to a maximum number of links that the communication circuit is able to support, the processor is configured to deactivate a link having the lowest data rate among the at least one link and activate the new link.

5. The electronic device of claim 1, wherein in case that there is a link in idle state among the at least one link, the processor is configured to determine whether the link in idle state supports the determined data rate, and switch the link in idle state to an activated state based on determining that the link in idle state supports the determined data rate.

6. The electronic device of claim 1, wherein the processor is configured to:

   determine whether to deactivate some of the at least one link based on the result of comparison between the identified latency and the latency required to carry out a service related to the data; and
   deactivate, upon determining to deactivate some of the links, some of the links based on the identified latency, the required latency, and data transmission or reception through activated links excluding those links to be deactivated that satisfies a condition related to the latency.

7. The electronic device of claim 6, wherein the processor is configured to determine a size of data to be transmitted through each of the activated links based on the data rate of each of the activated links excluding those links to be deactivated.

8. The electronic device of claim 6, wherein, based on determining to deactivate some of the links, the processor is configured to determine whether a power required for data transmission or reception through activated links excluding those links to be deactivated is lower than a power required for data transmission or reception through activated links including those links to be deactivated, and determine whether to perform deactivation of some links based on the above determination result.

9. The electronic device of claim 1, wherein the processor is configured to transmit the link setup request message to the external electronic device before receiving a response message indicating that the data has been received after completion of transmission of the data.

10. The electronic device of claim 1, wherein the processor is configured to transmit the link setup request message to the external electronic device while transmitting a response message indicating that the data has been received after completion of reception of the data.

11. The electronic device of claim 1, wherein:

the at least one link, as one of the multiple links, is a primary link that is allowed to receive a beacon during an idle period when no data traffic is transmitted and/or received; and
the remaining links excluding the at least one link among the multiple links are secondary links that are not allowed to receive a beacon during the idle period.

12. The electronic device of claim 11, wherein the processor is configured to:

identify information about each of the multiple links while the electronic device carries out a service; and
set, based on the information about each of the multiple links, one of the multiple links as a primary link that is allowed to receive a beacon during an idle period when no data traffic is transmitted and/or received, and set the remaining links excluding the one link as secondary links that are not allowed to receive a beacon during the idle period.

13. The electronic device of claim 12, wherein the processor is configured to place the secondary links in a deactivated state (doze state or inactive state), and transmit or receive data to or from the external electronic device through the primary link.

14. The electronic device of claim 12, wherein the processor is configured to determine whether to activate one of the secondary links based on a size of data to be transmitted or received to or from the external electronic device.

15. The electronic device of claim 12, wherein the processor is configured to identify throughput of each of the multiple links based on the information about each of the multiple links, and set one of the multiple links as the primary link based on the throughput of each of the multiple links.

FIG. 1

ELECTRONIC DEVICE 101

INPUT MODULE 150

SOUND OUTPUT MODULE 155

BATTERY 189

POWER MANAGEMENT MODULE 188

AUDIO MODULE 170

HAPTIC MODULE 179

DISPLAY MODULE 160

PROCESSOR 120
MAIN PROCESSOR 121
AUXILIARY PROCESSOR 123

SENSOR MODULE 176

CAMERA MODULE 180

MEMORY 130
VOLATILE MEMORY 132
NON-VOLATILE MEMORY 134
INTERNAL MEMORY 136
EXTERNAL MEMORY 138

COMMUNICATION MODULE 190
WIRELESS COMMUNICATION MODULE 192
WIRED COMMUNICATION MODULE 194

SUBSCRIBER IDENTIFICATION MODULE 196

ANTENNA MODULE 197

INTERFACE 177

CONNECTION TERMINAL 178

PROGRAM 140
APPLICATION 146
MIDDLEWARE 144
OPERATING SYSTEM 142

100

SECOND NETWORK 199

ELECTRONIC DEVICE 104

FIRST NETWORK 198

ELECTRONIC DEVICE 102

SERVER 108

EP 4 561 254 A1

# FIG. 2

**200**

**140**

## PROGRAM

### APPLICATIONS

| 251 HOME | 253 DIALER | 255 SMS/MMS | 257 IM | 259 BROWSER | 261 CAMERA | 263 ALARM |
|---|---|---|---|---|---|---|
| 265 CONTACT | 267 VOICE RECOGNITION | 269 E-MAIL | 271 CALENDAR | 273 MEDIA PLAYER | 275 ALBUM | 277 WATCH |
| 279 HEALTH | 281 ENVIRONMENT INFORMATION | | | | | |

**146**

### MIDDLEWARE

| 201 APPLICATION MANAGER | 203 WINDOW MANAGER | 205 MULTIMEDIA MANAGER | 207 RESOURCE MANAGER | 209 POWER MANAGER |
|---|---|---|---|---|
| 211 DATABASE MANAGER | 213 PACKAGE MANAGER | 215 CONNECTIVITY MANAGER | 217 NOTIFICATION MANAGER | 219 LOCATION MANAGER |
| 221 GRAPHIC MANAGER | 223 SECURITY MANAGER | 225 TELEPHONY MANAGER | 227 VOICE RECOGNITION MANAGER | |

**144**

## OPERATING SYSTEM

**142**

EP 4 561 254 A1

FIG. 3

300

310

**ELECTRONIC DEVICE**

313    323
331
FIRST LINK

**FIRST COMMUNICATION CIRCUIT**    311

314    324
332
SECOND LINK

**SECOND COMMUNICATION CIRCUIT**    312

320

**EXTERNAL ELECTRONIC DEVICE**

**THIRD COMMUNICATION CIRCUIT**    321

**FOURTH COMMUNICATION CIRCUIT**    322

FIG. 4A

FIG. 4B

Latency

Signaling

Transmission
(UL/DL)

Request

Time
margin (–)

Target
Latency

# FIG. 5

<u>500</u>

510

520

| COMMUNICATION CIRCUIT | ← → | PROCESSOR |

# FIG. 6

EP 4 561 254 A1

# FIG. 7

EP 4 561 254 A1

FIG. 8

EP 4 561 254 A1

FIG. 9

FIG. 10

# FIG. 11

1100

START

IDENTIFY THE LATENCY OF DATA ~1110

DETERMINE WHETHER TO ACTIVATE A NEW LINK BASED ON RESULT OF COMPARISON BETWEEN REQUIRED LATENCY AND IDENTIFIED LATENCY ~1120

DETERMINE DATA RATE REQUIRED FOR NEW LINK BASED ON REQUIRED LATENCY, IDENTIFIED LATENCY, AND DATA RATES OF AT LEAST ONE LINK ~1130

TRANSMIT LINK SETUP REQUEST MESSAGE INCLUDING INFORMATION INDICATING DETERMINED DATA RATE ~1140

ACTIVATE NEW LINK BASED ON RECEIVING RESPONSE MESSAGE ~1150

END

# FIG. 12

1200

```
                    ┌─────────────┐
                    │    START    │
                    └──────┬──────┘
                           │
                           ▼
        ┌──────────────────────────────────────┐  1210
        │      IDENTIFY THE LATENCY OF DATA     │
        └──────────────────┬───────────────────┘
                           │
                           ▼
        ┌──────────────────────────────────────┐  1220
        │  DETERMINE WHETHER TO DEACTIVATE      │
        │  SOME LINKS BASED ON RESULT OF        │
        │  COMPARISON BETWEEN REQUIRED LATENCY  │
        │  AND IDENTIFIED LATENC                │
        └──────────────────┬───────────────────┘
                           │
                           ▼
```

1230

THE LATENCY OF DATA TRANSMISSION OR RECEPTION THROUGH ACTIVATED LINKS EXCLUDING THE LINK TO BE DEACTIVATED SATISFIES THE CONDITION ASSOCIATED WITH THE LATENCY?

NO

YES    1240

DEACTIVATE SOME LINKS

1250

MAINTAIN SOME LINKS IN ACTIVATED STATE

END

FIG. 13

<u>1300</u>

1310                                              1320

| COMMUNICATION CIRCUIT | ←→ | PROCESSOR |

# FIG. 14

320

EXTERNAL ELECTRONIC DEVICE

321

THIRD
COMMUNICATION CIRCUIT

322

FOURTH
COMMUNICATION CIRCUIT

1300

ELECTRONIC DEVICE

1401

TRANSMIT BEACON SIGNAL

1403

TRANSMIT BEACON SIGNAL

1405

IDENTIFY STATE OF
EACH OF MULTIPLE LINKS

1407

SET ONE LINK
AS PRIMARY LINK

1409

ESTABLISH MULTIPLE LINKS
THROUGH PRIMARY LINK

# FIG. 15

1500

```
                    ┌─────────────┐
                    │    START    │
                    └──────┬──────┘
                           │
                           ▼
     ┌──────────────────────────────────────┐  1510
     │   IDENTIFY QUALITY OF PRIMARY LINK    │
     └──────────────────┬───────────────────┘
                        │
                        ▼
              ╱─────────────────────╲   1520
             ╱   QUALITY SATISFIES    ╲      NO
             ╲  SPECIFIED CONDITION?  ╱────────
              ╲─────────────────────╱
                        │
                       YES
                        ▼
     ┌──────────────────────────────────────┐  1530
     │  IDENTIFY QUALITY OF EACH OF MULTIPLE LINKS │
     └──────────────────┬───────────────────┘
                        │
                        ▼
     ┌──────────────────────────────────────┐  1540
     │   SET ONE OF MULTIPLE LINKS AS PRIMARY LINK │
     └──────────────────┬───────────────────┘
                        │
                        ▼
                 ┌─────────────┐
                 │     END     │
                 └─────────────┘
```

# FIG. 16

1600

```
       ┌─────────────┐
       │    START    │
       └─────────────┘
              │
              ▼
┌──────────────────────────────────────────────┐
│ DETECT ACTIVATION OF ANOTHER SHORT-RANGE       │
│ WIRELESS COMMUNICATION UTILIZING FREQUENCY     │───∽ 1610
│ BAND THAT OVERLAPS AT LEAST PARTIALLY WITH     │
│ FREQUENCY BAND OF MULTIPLE LINKS               │
└──────────────────────────────────────────────┘
              │
              ▼
┌──────────────────────────────────────────────┐
│ IDENTIFY AND CORRECT THE THROUGHPUT BASED ON   │
│ USAGE RATIO OF SHORT-RANGE WIRELESS            │───∽ 1620
│ COMMUNICATION AND INFORMATION ABOUT MULTIPLE   │
│ LINKS                                          │
└──────────────────────────────────────────────┘
              │
              ▼
┌──────────────────────────────────────────────┐
│ SET ONE OF MULTIPLE LINKS AS PRIMARY LINK      │───∽ 1630
│ BASED ON THROUGHPUT                            │
└──────────────────────────────────────────────┘
              │
              ▼
       ┌─────────────┐
       │     END     │
       └─────────────┘
```

# FIG. 17

1700

```
                        ┌──────────────┐
                        │    START     │
                        └──────┬───────┘
                               │
                               ▼
        ┌──────────────────────────────────────────────────┐
        │   IDENTIFY INFORMATION ABOUT MULTIPLE LINKS        │─── 1710
        └──────────────────────────────────────────────────┘
                               │
                               ▼
        ┌──────────────────────────────────────────────────┐
        │      SET ONE OF MULTIPLE LINKS AS PRIMARY LINK AND │
        │        SET REMAINING LINKS AS SECONDARY LINKS      │─── 1720
        │      BASED ON INFORMATION ABOUT MULTIPLE LINKS     │
        └──────────────────────────────────────────────────┘
                               │
                               ▼
                        ┌──────────────┐
                        │     END      │
                        └──────────────┘
```

## INTERNATIONAL SEARCH REPORT

| International application No. |
| --- |
| **PCT/KR2023/009790** |

### A. CLASSIFICATION OF SUBJECT MATTER

**H04W 76/15**(2018.01)i; **H04W 28/02**(2009.01)i; **H04W 28/06**(2009.01)i; **H04L 43/0888**(2022.01)i; **H04W 76/20**(2018.01)i; **H04W 84/12**(2009.01)i; **H04W 24/02**(2009.01)i; **H04W 24/08**(2009.01)i

According to International Patent Classification (IPC) or to both national classification and IPC

### B. FIELDS SEARCHED

Minimum documentation searched (classification system followed by classification symbols)

H04W 76/15(2018.01); H04L 1/00(2006.01); H04W 24/02(2009.01); H04W 28/08(2009.01); H04W 52/02(2009.01); H04W 56/00(2009.01); H04W 72/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 링크(link), 지연 시간(latency), 데이터 레이트(data rate), 활성화(activation), 셋업 (setup)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-1523145 B1 (FOUNDATION FOR RESEARCH AND BUSINESS, SEOUL NATIONAL UNIVERSITY OF SCIENCE AND TECHNOLOGY) 26 May 2015 (2015-05-26)<br>See paragraphs [0035]-[0045]. | 1-3,5-7,9-11 |
| A | | 4,8,12-15 |
| Y | WO 2021-183045 A1 (PANASONIC INTELLECTUAL PROPERTY CORPORATION OF AMERICA) 16 September 2021 (2021-09-16)<br>See paragraphs [0060] and [0061]. | 1-3,5-7,9-11 |
| A | KR 10-1607373 B1 (FOUNDATION FOR RESEARCH AND BUSINESS, SEOUL NATIONAL UNIVERSITY OF SCIENCE AND TECHNOLOGY) 29 March 2016 (2016-03-29)<br>See paragraphs [0024]-[0059]. | 1-15 |
| A | WO 2020-099437 A2 (ANALOG DEVICES INTERNATIONAL UNLIMITED COMPANY) 22 May 2020 (2020-05-22)<br>See claims 1-19. | 1-15 |

✓ Further documents are listed in the continuation of Box C.       ✓ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 October 2023** | **06 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/009790** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2021-080265 A1 (LG ELECTRONICS INC.) 29 April 2021 (2021-04-29)<br>    See claims 1-20. | 1-15 |

Form PCT/ISA/210 (second sheet) (July 2022)

## INTERNATIONAL SEARCH REPORT
### Information on patent family members

International application No.

**PCT/KR2023/009790**

| Patent document cited in search report | | | Publication date (day/month/year) | Patent family member(s) | | | Publication date (day/month/year) |
|---|---|---|---|---|---|---|---|
| KR | 10-1523145 | B1 | 26 May 2015 | None | | | |
| WO | 2021-183045 | A1 | 16 September 2021 | BR | 112022017533 | A2 | 18 October 2022 |
| | | | | CN | 115280894 | A | 01 November 2022 |
| | | | | EP | 4118930 | A1 | 18 January 2023 |
| | | | | JP | 2023-516121 | A | 18 April 2023 |
| | | | | KR | 10-2022-0152211 | A | 15 November 2022 |
| | | | | SG | 10202002245 | A | 28 October 2021 |
| | | | | US | 2023-0156840 | A1 | 18 May 2023 |
| KR | 10-1607373 | B1 | 29 March 2016 | KR | 10-2015-0069406 | A | 23 June 2015 |
| WO | 2020-099437 | A2 | 22 May 2020 | CN | 113170406 | A | 23 July 2021 |
| | | | | EP | 3881615 | A2 | 22 September 2021 |
| | | | | US | 2021-0376877 | A1 | 02 December 2021 |
| | | | | WO | 2020-099437 | A3 | 30 July 2020 |
| WO | 2021-080265 | A1 | 29 April 2021 | US | 2022-0394795 | A1 | 08 December 2022 |

Form PCT/ISA/210 (patent family annex) (July 2022)